# EUROPEAN PATENT SPECIFICATION

(11) **EP 4 102 368 B1**
(45) Date of publication and mention of the grant of the patent: **06.11.2024**
(21) Application number: 21868567.5
(22) Date of filing: 10.09.2021
(51) Int. Cl.: G06F 9/54, G06F 3/04817, G06F 3/0482, G06F 21/31, H04L 51/04, H04L 51/52, G06F 21/62

(54) **CROSS-DEVICE APPLICATION CALLING METHOD AND ELECTRONIC DEVICE**
ANRUFVERFAHREN EINER GERÄTEÜBERGREIFENDEN ANWENDUNG UND ELEKTRONISCHE VORRICHTUNG
PROCÉDÉ D'APPEL D'APPLICATION INTER-DISPOSITIFS ET DISPOSITIF ÉLECTRONIQUE

(30) Priority: 21.09.2020 CN 202010997315
(43) Date of publication of application: 14.12.2022
(73) Proprietor: Honor Device Co., Ltd., Shenzhen, Guangdong 518040 (CN)
(72) Inventor: HAN, Xiao, Shenzhen, Guangdong 518040 (CN); LI, Xuankai, Shenzhen, Guangdong 518040 (CN)
(74) Representative: Maiwald GmbH
(86) International application number: PCT/CN2021/117773
(87) International publication number: WO 2022/057742

(56) References cited:
- AU-A1- 2014 278 594
- CN-A- 105 308 634
- CN-A- 111 459 355
- US-A1- 2019 340 150

## Description

### TECHNICAL FIELD

Embodiments of this application relate to the field of electronic device technologies, and in particular, to a cross-device application invoking method and an electronic device.

### BACKGROUND

AU2014278594A1 describes that a device with a display and, optionally, a touch-sensitive surface detects a first input corresponding to a request to share first content from a first application while displaying the first application on the display. In response to detecting the first input, the device displays a sharing interface that includes a plurality of options for sharing the first content. It is described that while displaying the sharing interface, the device detects selection of an affordance in the sharing interface. It is described that in accordance with a determination that the affordance is a respective user-first sharing option for a respective user, the device initiates a process for sharing the first content with the respective user. It is described that in accordance with a determination that the affordance is a protocol-first sharing option for a respective protocol, the device initiates a process for sharing the first content using the respective protocol.

With the development of science and technology, there are more types of electronic devices (such as a mobile phone, a tablet computer, and a notebook computer). Because different types of electronic devices have different functions, application scenarios of different types of electronic device are also different. For example, the mobile phone may not only install various photographing applications, but also is small and easy to carry, so that a user may take photographing by using the mobile phone at any time. Processing performance of a notebook computer is higher than that of a mobile phone, and a screen of the notebook computer is larger for easy operation, so that a user can use the notebook computer to process a photo.

Currently, to improve user experience, different electronic devices may generally be associated, so that data is shared between the electronic devices, and the user can perform a series of operations by using a plurality of electronic devices. For example, after taking a photo by using a mobile phone, a user sends the photo to a notebook computer through Bluetooth or a mobile network. The user receives the photo by using the notebook computer, opens an application for processing a photo, and then processes the photo by using the application for processing a photo.

However, in the foregoing solution, the user needs to first receive the photo by using the notebook computer, then open the application, and finally process the photo by using the application. It can be learned that when a user needs to perform a series of operations by using a plurality of electronic devices, the user needs to perform a plurality of operations, and work efficiency is relatively low.

### SUMMARY

Embodiments of this application provide a cross-device application invoking method and an electronic device. When a user needs to perform a series of operations by using a plurality of electronic devices, a quantity of times of operations performed by the user can be reduced, and work efficiency of the user can be improved.

Appended claim 1 defines a cross-device application invoking method. Appended claim 8 defines a cross-device application invoking method. Appended claim 11 defines an electronic device. Appended claim 12 defines an electronic device. Appended claim 13 defines a computer storage medium. Appended claim 14 defines a computer storage medium. The invention and its scope of protection is defined by these independent claims.

### BRIEF DESCRIPTION OF DRAWINGS

FIG. 1A is a schematic diagram of an example of a display interface for sharing data according to an embodiment of this application;
FIG. 1B is a schematic diagram of another example of a display interface for sharing data according to an embodiment of this application;
FIG. 1C is a schematic diagram of another example of a display interface for sharing data according to an embodiment of this application;
FIG. 2 is a schematic diagram of a hardware structure of an electronic device according to an embodiment of this application;
FIG. 3 is a schematic diagram of a system structure of an electronic device according to an embodiment of this application;
FIG. 4 is a flowchart of a cross-device application invoking method according to an embodiment of this application;
FIG. 5A is a schematic diagram of an example of a display interface for cross-device application invoking according to an embodiment of this application;
FIG. 5B is a schematic diagram of another example of a display interface for cross-device application invoking according to an embodiment of this application;
FIG. 5C is a schematic diagram of another example of a display interface for cross-device application invoking according to an embodiment of this application;
FIG. 5D is a schematic diagram of another example of a display interface for cross-device application invoking according to an embodiment of this application;
FIG. 6 is a flowchart of another cross-device application invoking method according to an embodiment of this application;
FIG. 7A is a schematic diagram of an example of a display interface for cross-device application invoking according to an embodiment of this application;
FIG. 7B is a schematic diagram of another example of a display interface for cross-device application invoking according to an embodiment of this application;
FIG. 7C is a schematic diagram of another example of a display interface for cross-device application invoking according to an embodiment of this application;
FIG. 8 is a flowchart of another cross-device application invoking method according to an embodiment of this application;
FIG. 9A is a schematic diagram of another example of a display interface for cross-device application invoking according to an embodiment of this application;
FIG. 9B is a schematic diagram of another example of a display interface for cross-device application invoking according to an embodiment of this application;
FIG. 10 is a flowchart of another cross-device application invoking method according to an embodiment of this application;
FIG. 11 is a schematic diagram of another example of a display interface for cross-device application invoking according to an embodiment of this application;
FIG. 12 is a flowchart of another cross-device application invoking method according to an embodiment of this application;
FIG. 13 is a schematic diagram of composition of a cross-device application invoking apparatus according to an embodiment of this application;
FIG. 14A and FIG. 14B are a flowchart of another cross-device application invoking method according to an embodiment of this application; and
FIG. 15 is a schematic diagram of structural composition of a chip system according to an embodiment of this application.

### DESCRIPTION OF EMBODIMENTS

The following clearly and completely describes the technical solutions in embodiments of this application with reference to the accompanying drawings in the embodiments of this application. Apparently, the described embodiments are merely some rather than all of embodiments of this application. Based on the embodiments of this application, all other embodiments obtained by a person of ordinary skill in the art without creative efforts fall within the protection scope of this application.

In this application, the character "/" generally indicates an "or" relationship between the associated objects. For example, A/B may be understood as A or B.

Terms "first" and "second" are merely used for description purposes, and shall not be understood as an indication or implication of relative importance or implicitly indicate the number of indicated technical features. Therefore, a feature defined as "first" or "second" may explicitly or implicitly include one or more of the features. In the description of the embodiments, unless otherwise stated, "a plurality of" means two or more.

In addition, the terms "include" and "have" mentioned in the description of this application and any other variant thereof are intended to cover non-exclusive inclusion. For example, a process, method, system, product, or device that includes a series of steps or modules is not limited to the listed steps or modules, but optionally further includes an unlisted step or module, or optionally further includes another inherent step or module of the process, method, product, or device.

In addition, in the embodiments of this application, words such as "exemplary" or "example" are used to indicate instances, illustrations, or descriptions. Any embodiment or design scheme described as "exemplary" or "example" in this application should not be construed as being more preferred or advantageous than other embodiments or design schemes. Specifically, the use of words such as "exemplary" or "example" is intended to present concepts in a specific manner.

With development of science and technology, data may be transmitted between different electronic devices in a manner such as a mobile network or a short-range wireless connection (such as a Bluetooth technology). For example, a user A clearly may process a picture a in a mobile phone of the user A by using an image processing application in a notebook computer. In this case, the user A may enable the image processing application in the notebook computer to process the picture a in the mobile phone of the user A.

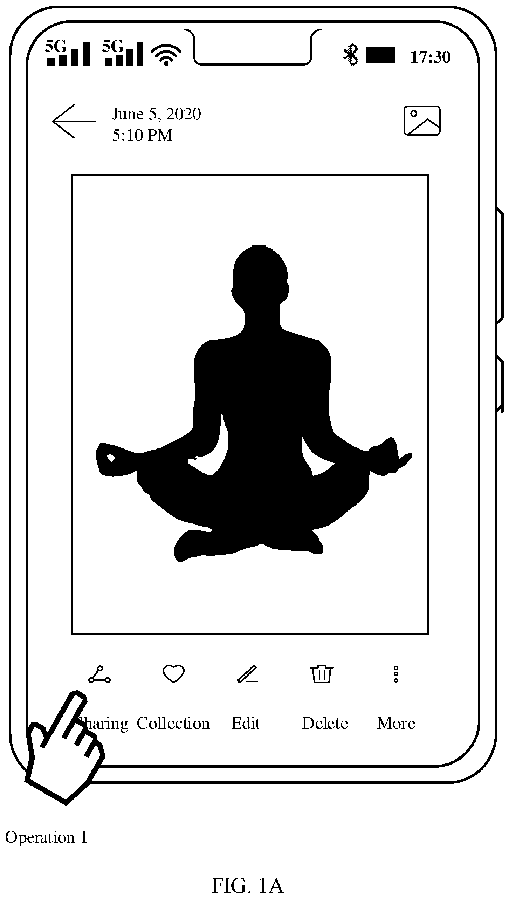

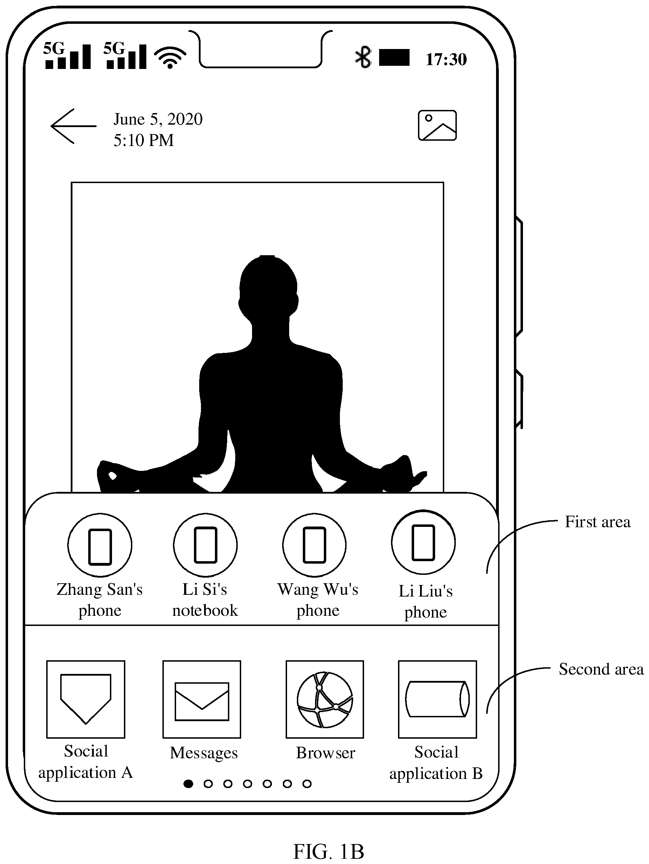

Manner 1: As shown in FIG. 1A, the user A may tap a sharing option (that is, operation 1) in the picture. Then, as shown in FIG. 1B, a first area is displayed on the mobile phone, and electronic devices displayed in the first area are surrounding electronic devices found by the mobile phone of the user A through Bluetooth, such as Zhang San's phone, Li Si's notebook, Wang Wu's phone, and Li liu's phone. The user A may use an image processing application in Li Si's notebook to process the picture a. In this case, the user A may select Li Si's notebook in the first area. The mobile phone of the user A sends the picture a to a notebook computer corresponding to Li Si's notebook, and the notebook computer receives and stores the picture a. Then, the user A may further operate the notebook computer, for example, open the image processing application, search for, by using the image processing application, the picture a stored in the notebook computer and open the picture a, and finally process the picture a by using the image processing application.

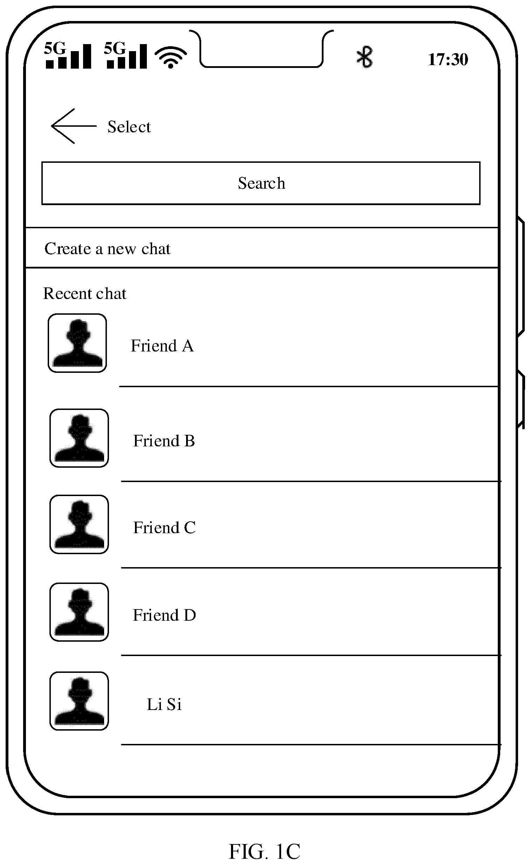

Manner 2: As shown in FIG. 1A, the user A may tap the sharing option (that is, operation 1) in the picture. Then, as shown in FIG. 1B, the mobile phone further displays a second area, and applications displayed in the second area are applications installed in the mobile phone of the user A, such as a social application A, Messages, Browser, and a social application B. The user taps the social application A, and the mobile phone displays contact information in the social application A. As shown in FIG. 1C, the contact list includes a friend A, a friend B, a friend C, a friend D, and Li Si. Then, the user selects Li Si and sends the picture a to Li Si by using the mobile network. Then, the user A may log in to an account of Li Si by using a social application A in the notebook computer, and receive the picture a sent by the user A. Then, the user A may store the picture a in storage space of the notebook computer. Finally, the user A operates the notebook computer, for example, opens the image processing application, searches for, by using the image processing application, the picture a stored in the notebook computer and opens the picture a, and finally processes the picture a by using the image processing application.

However, in the technical solution in the foregoing manner 1, the user A can only send the picture a to the notebook computer by using a Bluetooth technology. In addition, the user A still needs to perform operations for a plurality of times (open the application, search for a storage location of the picture, and open the picture), thereby reducing work efficiency of the user. In the technical solution in the foregoing manner 2, it is required to ensure that the notebook computer has the same social application (such as the social application A) as the mobile phone, and that an account of the user A in the social application has an association relationship (such as a friendship relationship) with the account of the social application logged in to the notebook computer. In addition, the user A further needs to store the received picture a in the storage space of the notebook computer, and then performs a plurality of operations, which also reduces work efficiency of the user.

In view of this, an embodiment of this application provides a cross-device application invoking method. In the method, a first electronic device may display icons of a plurality of applications, and the plurality of applications include an application that is in another electronic device other than the first electronic device and that is related to target data. Then, the first electronic device may send the target data to a second electronic device, and indicate the second electronic device to process the target data by using a first application. In this way, the user may view, by using the first electronic device, an application that is in another electronic device and related to the target data without opening the another electronic device. In addition, the user does not need to perform an operation on the second electronic device, and the second electronic device may process the target data by using the first application, thereby reducing a quantity of times of operations performed by the user and improving work efficiency of the user.

It should be noted that an application related to the target data is an application that can process the target data. For example, if the target data is audio data, the plurality of applications may include an audio playback application, an audio processing application, a social application, and the like. The audio playback application may play the audio. The audio processing application may process the audio data (for example, reduce background noise in the audio data). The social application may share the audio data with another user. Because a picture viewer cannot process audio data, the picture viewer may not be included in the plurality of applications. For another example, if the target data is picture data, the plurality of applications may include a picture viewer, an image processing application, and a social application. The picture viewer may be used to view the picture. The image processing application may process the picture data (for example, perform picture retouching). The social application may share the picture with another user. Because an audio player cannot process picture data, the audio player may not be included in the plurality of applications.

The application (for example, the first application or a second application) in this embodiment of this application may be an embedded application (that is, a system application of the electronic device) installed in the electronic device or a downloadable application. The embedded application is an application provided as part of implementation of an electronic device (such as a mobile phone). The downloadable application is an application that can provide an Internet Protocol Multimedia Subsystem (Internet Protocol Multimedia Subsystem, IMS) connection of the application. The downloadable application may be an application installed in a terminal in advance, or may be a third-party application downloaded and installed by a user in the terminal.

For example, the foregoing application may be an embedded application (that is, a system application of the terminal) installed in the terminal. For example, the foregoing first application may be a picture editor, and the second application may be Messages. In this method, that the target data is picture data is used as an example. The first electronic device may indicate the second electronic device to open the picture editor, and to process, on the second electronic device by using the picture editor, the picture data sent by the first electronic device. The first electronic device may further indicate the second electronic device to open an email application, and send the picture data to a contact in the electronic device by using an SMS message.

For another example, the plurality of applications may be downloadable applications. The foregoing first application may be a video playback application. In the method, that the target data is video data is used as an example. The first electronic device may indicate the second electronic device to enable the video playback application, and to play a video on the second electronic device by using the video playback application.

For example, the electronic device in this embodiment of this application may be a tablet computer, a mobile phone, a desktop, a laptop, a handheld computer, a notebook computer, an ultra-mobile personal computer (ultra-mobile personal computer, UMPC), a netbook, or a device such as a cellular phone, a personal digital assistant (personal digital assistant, PDA), an augmented reality (augmented reality, AR)/virtual reality (virtual reality, VR) device, or an in-vehicle device. A specific form of the electronic device is not specifically limited in this embodiment of this application. In this embodiment of this application, electronic devices may be classified into a private device and a public device. It may be understood that the private device is used to indicate a device that can be used only by an owner (that is, an owner of the device). That is, usually only one account is logged in to on the private device, and does not change. For example, the private device may be a device such as a mobile phone, a smart watch, smart glasses, or a headset. The public device is used to indicate a device that can be used by any user. That is, a plurality of accounts may be logged in to on the public device, and an association exists between the plurality of different accounts. For example, the public device may be a television, a speaker, a tablet computer, or the like.

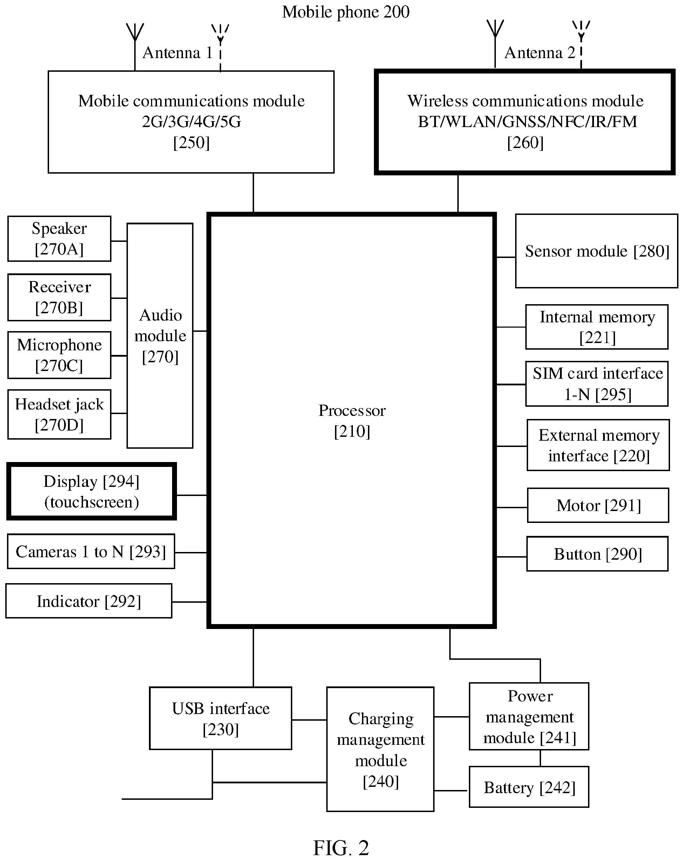

The cross-device application invoking method provided in this application may be executed by a cross-device application invoking apparatus, and the execution apparatus may be the electronic device shown in FIG. 2. In addition, the execution apparatus may alternatively be a central processing unit (Central Processing Unit, CPU) of the electronic device, or a control module that is in the electronic device and that is used for cross-device application invoking. In embodiments of this application, an example in which an electronic device executes the cross-device application invoking method is used to describe the cross-device application invoking method provided in the embodiments of this application.

Refer to FIG. 2. In this application, an example in which the electronic device is the mobile phone 200 shown in FIG. 2 is used to describe the electronic device provided in this application. The mobile phone 200 shown in FIG. 2 is merely an example of an electronic device, and the mobile phone 200 may have more or fewer components than those shown in the figure, or two or more components may be combined, or components are configured in different manners. The various components shown in FIG. 2 may be implemented in hardware including one or more signal processing and/or application-specific integrated circuits, software, or a combination of hardware and software.

As shown in FIG. 2, the mobile phone 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, and a subscriber identification module (subscriber identification module, SIM) card interface 295.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment does not constitute a specific limitation on the mobile phone 200. In other embodiments, the mobile phone 200 may include more or fewer components than those shown in the figure, or some components may be combined, or some components may be split, or components are arranged in different manners. The illustrated components may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and a command center of the mobile phone 200. The controller may generate an operation control signal based on an instruction operation code and a time sequence signal, to control instruction reading and instruction execution.

A memory may be disposed in the processor 210, and is configured to store an instruction and data. In some embodiments, the memory in the processor 210 is a cache memory. The memory may store an instruction or data that has just been used or is cyclically used by the processor 210. If the processor 210 needs to use the instruction or data again, the instruction or data may be directly invoked from the memory. Therefore, repeated access is avoided, a waiting time of the processor 210 is reduced, and system efficiency is improved.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment is merely an example for description, and does not constitute a limitation on the structure of the mobile phone 200. In some other embodiments, the mobile phone 200 may alternatively use an interface connection manner different from that in the foregoing embodiment, or use a combination of a plurality of interface connection manners.

The charging management module 240 is configured to receive a charging input from a charger. The charger may be a wireless charger, or may be a wired charger. While charging the battery 242, the charging management module 240 may further supply power to the electronic device by using the power management module 241.

The power management module 241 is configured to connect the battery 242, the charging management module 240, and the processor 210. The power management module 241 receives input of the battery 242 and/or the charging management module 240, and supplies power to the processor 210, the internal memory 221, the external memory, the display 294, the camera 293, the wireless communications module 260, and the like. In some other embodiments, the power management module 241 and the charging management module 240 may alternatively be disposed in a same component.

A wireless communication function of the mobile phone 200 may be implemented through the antenna 1, the antenna 2, the mobile communications module 250, the wireless communications module 260, the modem processor, the baseband processor, and the like. In some embodiments, the antenna 1 of the mobile phone 200 is coupled to the mobile communications module 250, and the antenna 2 is coupled to the wireless communications module 260, so that the mobile phone 200 can communicate with a network and another device by using a wireless communications technology. For example, in this embodiment of this application, the mobile phone 200 may send the foregoing target data to another device by using a wireless communications technology.

The antenna 1 and the antenna 2 are configured to transmit and receive electromagnetic wave signals. Each antenna in the mobile phone 200 may be configured to cover a single or a plurality of communication frequency bands. Different antennas may be multiplexed to improve antenna utilization. For example, the antenna 1 may be multiplexed into a diversity antenna of a wireless local area network. In other embodiments, the antenna may be used in combination with a tuning switch.

The mobile communications module 250 may provide a wireless communication solution, including 2G/3G/4G/5G or the like, that is applied to the mobile phone 200. The mobile communications module 250 may include at least one filter, a switch, a power amplifier, a low noise amplifier (low noise amplifier, LNA), and the like. The mobile communications module 250 may receive an electromagnetic wave through the antenna 1, perform processing such as filtering and amplification on the received electromagnetic wave, and transmit a processed electromagnetic wave to the modem processor for demodulation.

The mobile communications module 250 may further amplify a signal obtained after modulation by the modem processor, and convert the signal into an electromagnetic wave through the antenna 1 for radiation. In some embodiments, at least a part of the functional modules of the mobile communications module 250 may be disposed in the processor 210. In some embodiments, at least a part of the functional modules of the mobile communications module 250 may be disposed in the same device as at least a part of the modules of the processor 210.

The wireless communications module 260 may provide a solution to wireless communication applied to the mobile phone 200, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. For example, in this embodiment of this application, the mobile phone 200 may access the Wi-Fi network by using the wireless communications module 260.

The wireless communications module 260 may be one or more components that integrate at least one communication processing module. The wireless communications module 260 receives an electromagnetic wave over the antenna 2, performs frequency modulation and filtering processing on an electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation over the antenna 2.

The mobile phone 200 implements a display function by using the GPU, the display 294, the application processor, and the like. The GPU is a microprocessor for image processing, and is connected to the display 294 and the application processor. The GPU is configured to perform mathematical and geometrical calculation, and is configured to perform graphics rendering. The processor 210 may include one or more GPUs that execute program instructions to generate or change display information.

The display 294 is configured to display an image, a video, and the like. The display 294 includes a display panel. For example, in this embodiment of this application, the display 294 may be configured to display an application interface of the foregoing first application, such as a device sharing interface, a device searching interface, and a two-dimensional code scanning interface.

The mobile phone 200 may implement a photographing function by using the ISP, the camera 293, the video codec, the GPU, the display 294, the application processor, and the like. The ISP is configured to process data fed back by the camera 293. The camera 293 is configured to capture a still image or a video. In some embodiments, the mobile phone 200 may include one or N cameras 293, where N is a positive integer greater than 1.

The external memory interface 220 may be configured to connect to an external memory card, for example, a micro SD card, to extend a storage capability of the mobile phone 200. The external storage card communicates with the processor 210 through the external memory interface 220, to implement a data storage function. For example, files such as music and a video are stored in the external memory card.

The internal memory 221 may be configured to store computer-executable program code, where the computer-executable program code includes instructions. The processor 210 executes various functional applications of the mobile phone 200 and data processing by running instructions stored in the internal memory 221. For example, in this embodiment of this application, the processor 210 may execute an instruction stored in the internal memory 221. The internal memory 221 may include a program storage area and a data storage area.

The program storage area may store an operating system, an application (for example, a sound playback function or an image playback function) required by at least one function, and the like. The data storage area may store data (for example, audio data and an address book) and the like created when the mobile phone 200 is used. In addition, the internal memory 221 may include a high-speed random access memory, or may include a non-volatile memory such as at least one magnetic disk memory, a flash memory, or a universal flash storage (universal flash storage, UFS).

The mobile phone 200 may implement audio functions by using the audio module 270, the speaker 270A, the receiver 270B, the microphone 270C, the headset jack 270D, the application processor, and the like. The audio functions are, for example, music playback and recording.

The button 290 includes a power-on button, a volume button, and the like. The button 290 may be a mechanical button, or may be a touch-sensitive button. The motor 291 may generate a vibration prompt. The motor 291 may be used for an incoming call vibration prompt, or may be used for touch vibration feedback. The indicator 292 may be an indicator light, and may be used to indicate a charging status or a power change, or may be used to indicate a message, a missed call, a notification, or the like. The SIM card interface 295 is configured to connect to a SIM card. The SIM card may be inserted into the SIM card interface 295 or pulled out of the SIM card interface 295, so that the SIM card is in contact with or separated from the mobile phone 200. The mobile phone 200 may support one or N SIM card interfaces, where N is a positive integer greater than 1. The SIM card interface 295 may support a Nano SIM card, a Micro SIM card, a SIM card, and the like.

Although not shown in FIG. 2, the mobile phone 200 may further include a flash light, a micro projection apparatus, a near field communication (Near Field Communication, NFC) apparatus, and the like. Details are not described herein again.

After a hardware structure of the electronic device is described, a system architecture of the electronic device provided in this application is described by using the electronic device as the mobile phone 200 as an example herein. The system architecture of the mobile phone 200 may use a layered architecture, an event-driven architecture, a microkernel architecture, a micro service architecture, or a cloud architecture. In this embodiment of the present invention, an Android^{®} system of a layered architecture is used as an example to illustrate a software structure of the mobile phone 200.

In the layered architecture, software is divided into several layers, and each layer has a clear role and task. Layers communicate with each other by using software interfaces. In some embodiments, the Android^{®} system is divided into five layers: an application layer, an application framework layer, an Android^{®} runtime (Android^{®} runtime) and system library, a hardware abstraction layer, and a kernel layer from top to bottom.

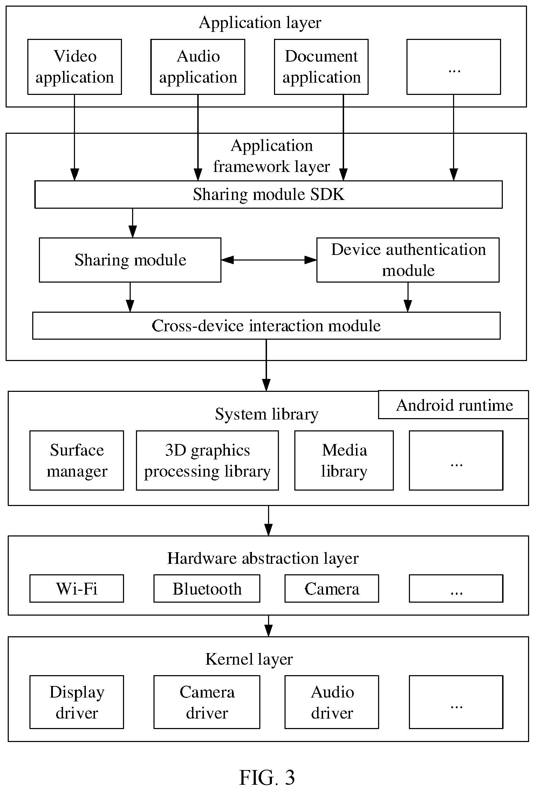

The application layer may include a series of application packages. As shown in FIG. 3, the application packages may include a video-type application, an audio-type application, a document-type application, and the like. For example, the video-type application may be a video player, a video application, or the like. The audio-type application may be a music player, an audio processing application, or the like.

The application framework layer provides an application programming interface (application programming interface, API) and a programming framework for applications at the application layer. The application framework layer includes some predefined functions. As shown in FIG. 3, the application framework layer may include a sharing module software development kit (Software Development Kit, SDK), a sharing module, a device authentication module, and a cross-device interaction module. An application may invoke the sharing module SDK to share data with another electronic device (for example, the second electronic device). The device authentication module may receive identity information (for example, information about a login account of the first electronic device) sent by the sharing module, and obtain identity information of the second electronic device by using the cross-device interaction module, so as to perform identity verification. In addition, the device authentication module may feed back a verification result to the sharing module. The sharing module may receive to-be-shared data (that is, target data) in an application, and send a notification message to the second electronic device by using the cross-device interaction module. The notification message may include an instruction for obtaining the identity information of the second electronic device, the target data, and an instruction for instructing the second electronic device to execute a target action. The device authentication module may include HICHAIN. The cross-device interaction module may complete information interaction between two electronic devices (for example, the first electronic device and the second electronic device), and the device authentication module may include a soft bus.

The Android^{®} runtime (Android^{®} Runtime) includes a kernel library and a virtual machine. The Android^{®} runtime is responsible for scheduling and management of the Android^{®} system.

The kernel library includes two parts: a function that needs to be invoked in Java language and a kernel library of Android^{®}. The application layer and the application framework layer run in the virtual machine. The virtual machine executes java files at the application layer and the application framework layer as binary files. The virtual machine is used to perform functions such as object lifecycle management, stack management, thread management, security and abnormity management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL). The surface manager is used to manage a display subsystem and provide fusion of 2D and 3D layers for a plurality of applications. The media library supports playback and recording in various commonly used audio and video formats, still image files, and the like. The media library may support a plurality of audio and video coding formats, such as: MPEG4, H.264, MP3, AAC, AMR, JPG, PNG, and the like. The three-dimensional graphics processing library is used to implement three-dimensional graphics drawing, image rendering, composition, layer processing, and the like. The 2D graphics engine is a drawing engine for 2D drawing.

The hardware abstraction layer (Hardware Abstraction Layer, HAL) is an interface layer between an operating system kernel and a hardware circuit, and is used to abstract hardware. It hides hardware interface details of a specific platform, provides a virtual hardware platform for an operating system, makes it hardware independent, and can be transplanted on a plurality of platforms. For example, in this embodiment of this application, the HAL includes Wi-Fi, Bluetooth, and the camera.

The kernel layer is a layer between hardware and software. The kernel layer includes at least a display driver, a camera driver, an audio driver, and a sensor driver. The following describes examples of working procedures of software and hardware of the electronic device with reference to a photographing scenario. When the touch sensor receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera.

The methods in the following embodiments may be implemented in an electronic device that have the foregoing hardware structure and the foregoing system architecture. In the following embodiments, an example in which the foregoing electronic device is the mobile phone 200 is used to describe the method in the embodiments of this application.

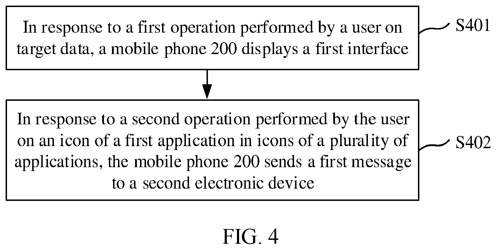

An embodiment of this application provides a cross-device application invoking method. As shown in FIG. 4, the cross-device application invoking method may include S401 and S402.

S401: In response to a first operation performed by a user on target data, the mobile phone 200 displays a first interface.

It should be noted that the target data is any type of file data in the mobile phone 200. The target data includes: audio data, video data, image data, document data, or the like. For example, when the target data is audio data, the target data may be a piece of music. When the target data is video data, the target data may be a movie. When the target data is image data, the target data may be a photo. When the target data is document data, the target data may be a classroom note. The target data is not limited in this embodiment of this application.

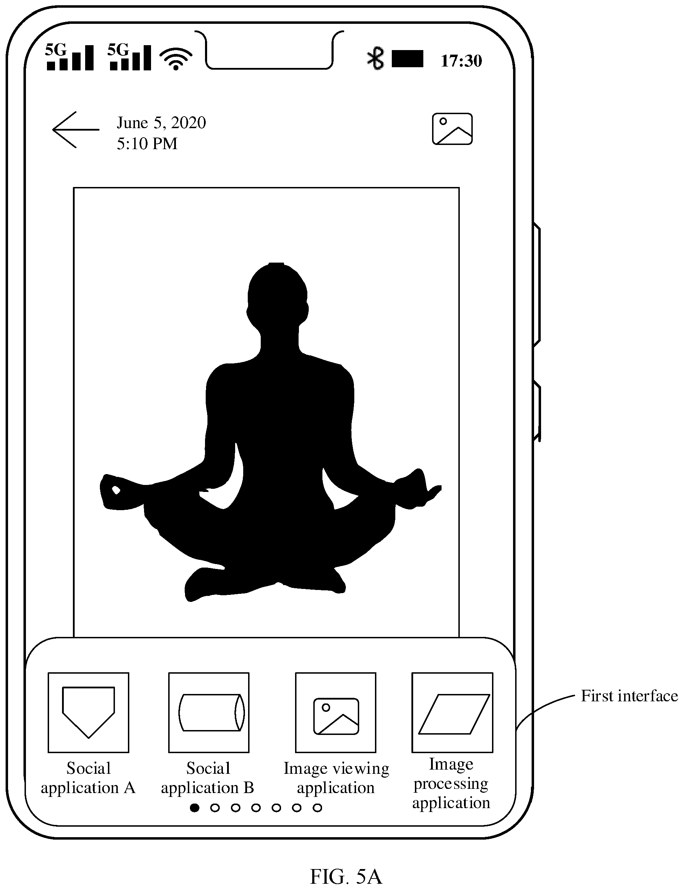

The first interface displayed on the mobile phone 200 includes icons of a plurality of applications, and the plurality of applications include applications related to the target data in one or more electronic devices. For example, if the target data is a photo, as shown in FIG. 5A, the first interface may include a social application A, a social application B, an image viewing application, an image processing application, and the like. If the target data is a piece of music, the first interface may include a social application A, a social application B, a music player, a video player, and the like.

It may be understood that, when using the mobile phone 200, the user may see the icons of the plurality of applications included in the first interface displayed on the mobile phone 200, so that the user may know application options that can be used by the user. The plurality of applications include applications related to the target data, so that the user can select, from the plurality of applications, an application that can process the target data.

Optionally, that the plurality of applications include applications related to the target data in one or more electronic devices is specifically: the plurality of applications include applications that are related to the target data in the one or more electronic devices and that are not installed in the mobile phone 200. For example, the target data is a picture. An image processing application is installed in the mobile phone 200. Applications in a notebook computer include a social application A, a social application B, and the image processing application. In this case, the plurality of applications include the social application A and the social application B. That is, the first interface displayed on the mobile phone 200 includes an icon of the social application A and an icon of the social application B.

It may be understood that, generally, if an application (for example, a first application) is installed in the mobile phone 200, the user does not need to use the first application in another electronic device. That is, only when the first application is not installed in the first electronic device, the user uses a second application in the second electronic device to process the target data. Therefore, when the plurality of applications that are displayed in the first electronic device are applications that are related to the target data in the one or more electronic devices and that are not installed in the first electronic device, this can effectively help the user reduce options, prevent the user from choosing from too many options, and improve user experience.

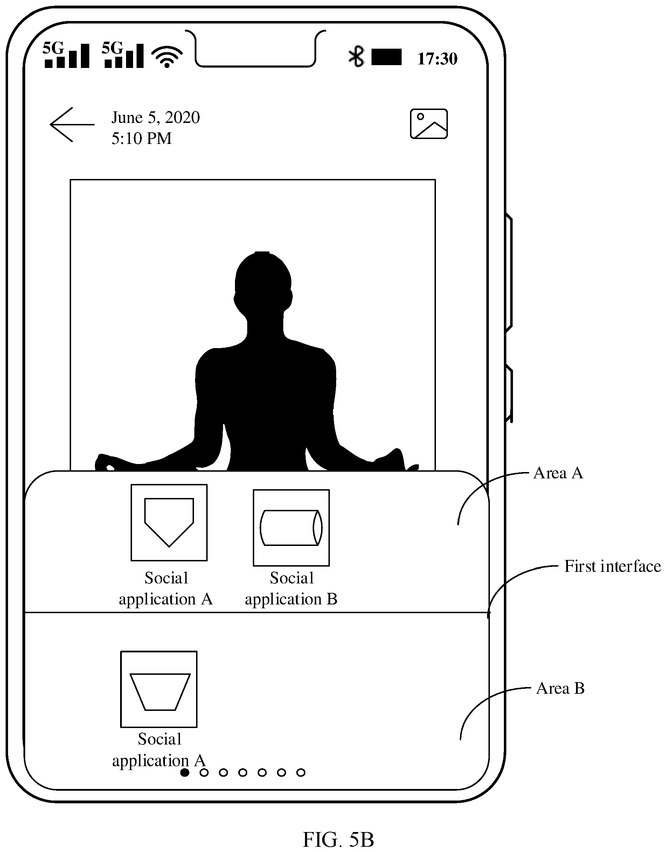

Optionally, the icons of the plurality of applications further include an icon of an application that is in the mobile phone 200 and related to the target data. For example, if the target data is a photo, as shown in FIG. 5B, the first interface may include an area A and an area B. Icons of applications displayed in the area A are a social application A and a social application B installed in another electronic device (for example, a notebook computer), and an icon of an application displayed in the area B is an image processing application installed in the mobile phone 200. That is, the first interface displayed on the mobile phone 200 includes an icon of the social application A, an icon of the social application B, and an icon of the image processing application.

It may be understood that the user may select an application in another electronic device (such as the notebook computer), or may select an application in the mobile phone 200. In this way, the user may be given more choices to improve user experience.

It should be noted that the one or more electronic devices (for example, the second electronic device) are electronic devices other than the mobile phone 200. The one or more electronic devices and the mobile phone 200 may be electronic devices under a same network. The mobile phone 200 may be wirelessly connected to the one or more electronic devices by using a technology such as Wi-Fi or Bluetooth. For example, the one or more electronic devices and the mobile phone 200 are devices under a home network of the user A. The one or more electronic devices include a tablet computer of the user A, a notebook computer of the user A, and an intelligent speaker of the user A.

In this embodiment of this application, a distance between the one or more electronic devices and the mobile phone 200 is less than a preset distance threshold. The preset distance threshold may be set based on a hardware capability of the electronic device. This is not limited in this embodiment of this application. For example, the preset distance threshold may be 5 m, 10 m, or 15 m.

In a possible implementation, in response to the first operation performed by the user on the target data, the mobile phone 200 may send indication information of a file type of the target data to the one or more electronic devices. Then, the mobile phone 200 may receive icons of a plurality of applications from the one or more electronic devices, and display the first interface that includes the icons of the plurality of applications. The mobile phone 200 may determine the file type of the target data based on a file extension name of the target data. This is not limited in this embodiment of this application.

In some embodiments, after receiving the icons of the plurality of applications from the one or more electronic devices, the mobile phone 200 may determine, based on an already installed application in the mobile phone 200, the first interface displayed on the mobile phone 200.

S402: In response to a second operation performed by the user on an icon of the first application in the icons of the plurality of applications, the mobile phone 200 sends a first message to the second electronic device.

The first message includes the target data, the first application is an application in the second electronic device in the one or more electronic devices, and the first message is used to indicate the second electronic device to process the target data by using the first application.

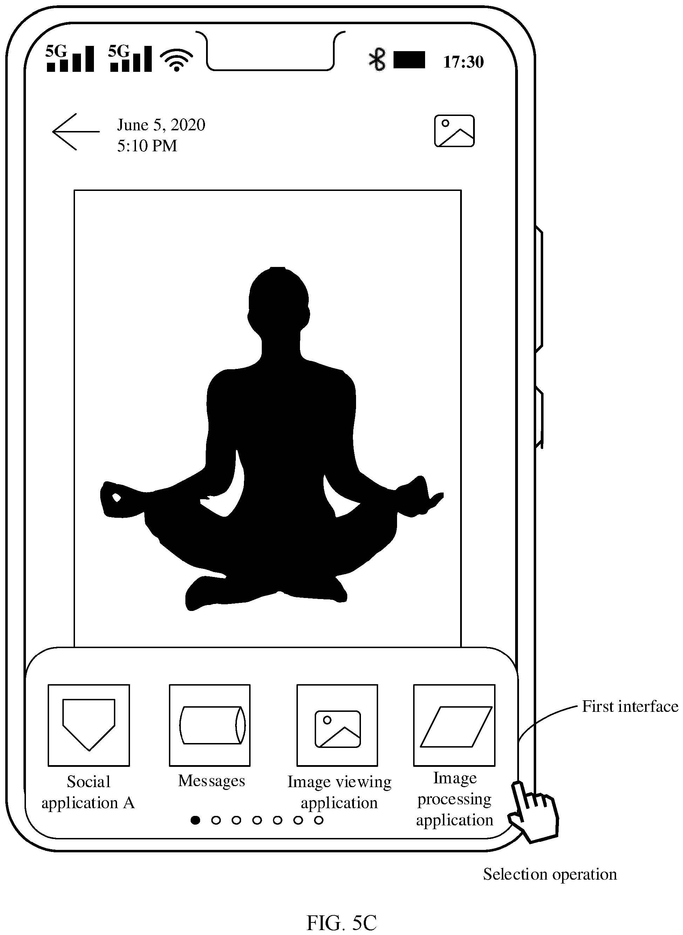

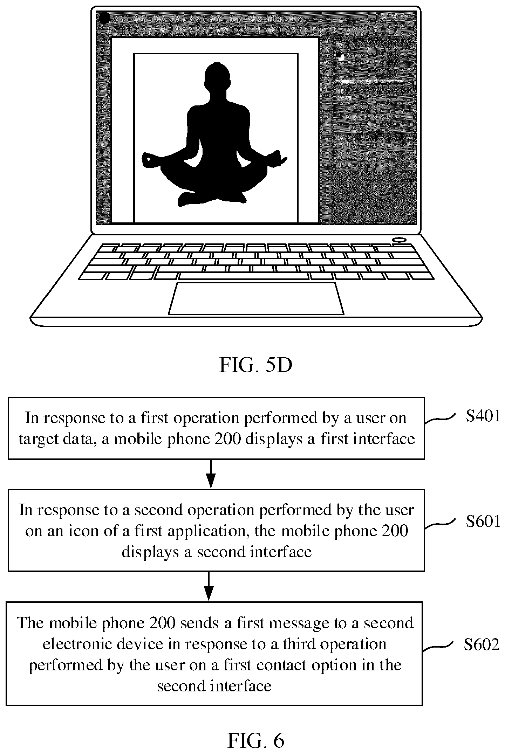

For example, the target data is a picture a. As shown in FIG. 5C, the user performs a selection operation on an image processing application in the first interface displayed on the mobile phone 200. The mobile phone 200 sends the picture a to the notebook computer, and indicates the notebook computer to open the picture a by using the image processing application. Then, as shown in FIG. 5D, the notebook computer opens the image a by using the image processing application.

Based on the foregoing technical solution, after the user performs the first operation on the target data, the first electronic device displays the first interface including the icons of the plurality of applications, where the plurality of applications are applications related to the target data in another electronic device. In this way, the user may view, by using the first electronic device, an application that is in another electronic device and related to the target data without opening the another electronic device. In addition, in response to the second operation performed by the user on the icon of the first application, the first electronic device may send the first message to the second electronic device, so as to indicate the second electronic device to process the target data by using the first application. That is, the first electronic device may invoke the first application in the second electronic device to process the target data in response to the second operation performed by the user on the icon of the first application. Therefore, according to the method in this application, the user can invoke the first application in the second electronic device to process the target data without a need of separately performing a plurality of operations on the first electronic device and the second electronic device. In this way, a quantity of times of operations performed by the user can be reduced, and efficiency of processing the foregoing target data can be improved.

The following uses an example in which the first application is a social application to describe S402. As shown in FIG. 6, S402 may include S601 and S602.

S601: In response to the second operation performed by the user on the icon of the first application, the mobile phone 200 displays a second interface.

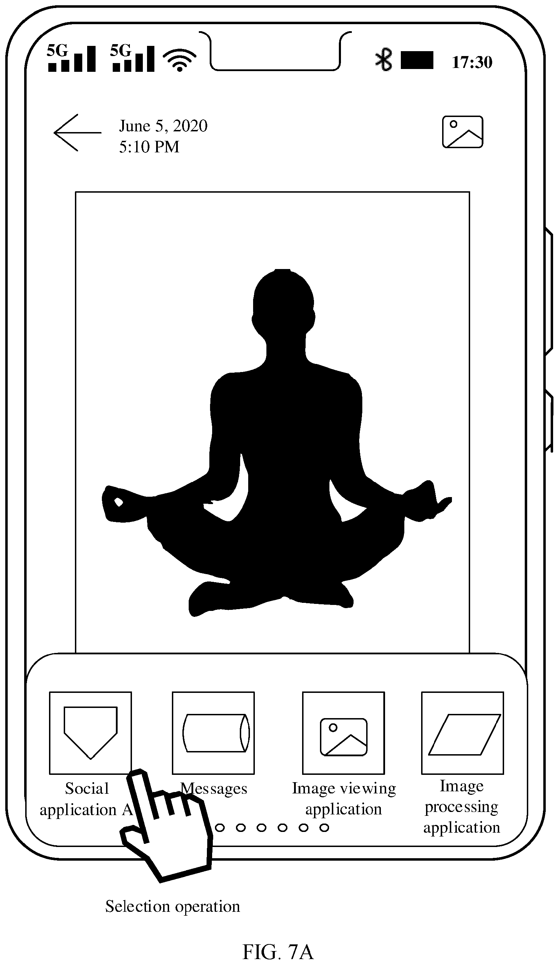

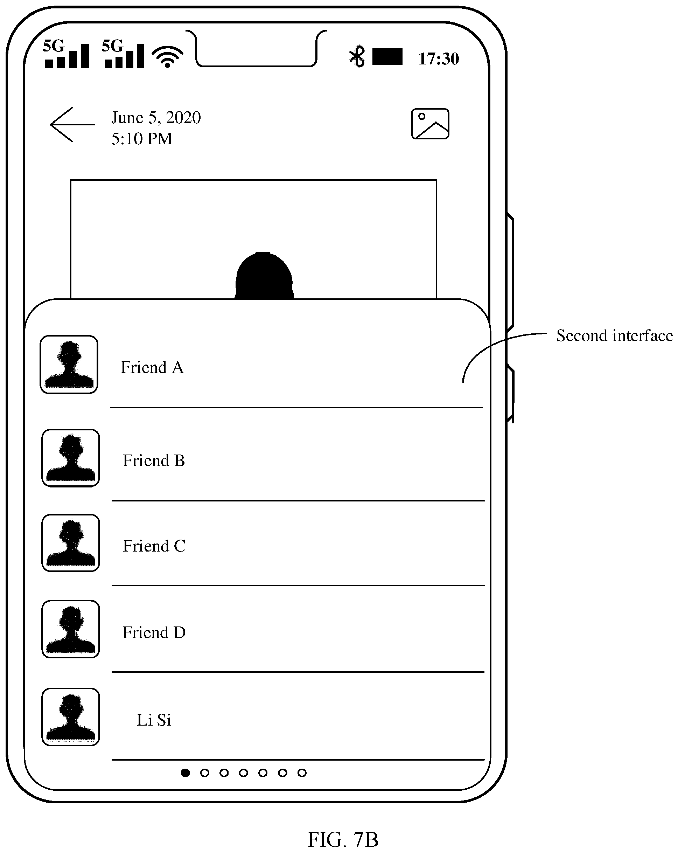

The second interface includes a plurality of contact options of the first application, and each contact option is corresponding to one contact in the first application. For example, as shown in FIG. 7A, the user performs a selection operation on the social application A, and the mobile phone 200 displays a plurality of contact options in the social application A. As shown in FIG. 7B, the plurality of contact options include Friend A, Friend B, Friend C, Friend D, and Li Si.

In a possible implementation, the mobile phone 200 sends, to the second electronic device, a message for requesting contact information in the first application. The second electronic device receives the message for requesting the contact information in the first application, obtains the contact information in the first application, and sends the contact information in the first application to the mobile phone 200. Then, the mobile phone 200 receives the contact information in the first application, and displays the second interface.

It should be noted that, after the user performs the first operation on the target data, the mobile phone 200 may send, to the second electronic device, the message for requesting the contact information in the first application. The mobile phone 200 may alternatively send, to the second electronic device after the user performs the second operation on the icon of the first application, the message for requesting the contact information in the first application. This is not limited in this embodiment of this application. Generally, after the user performs the second operation on the icon of the first application, the mobile phone 200 sends, to the second electronic device, the message for requesting the contact information in the first application.

S602: The mobile phone 200 sends a first message to the second electronic device in response to a third operation performed by the user on a first contact option in the second interface.

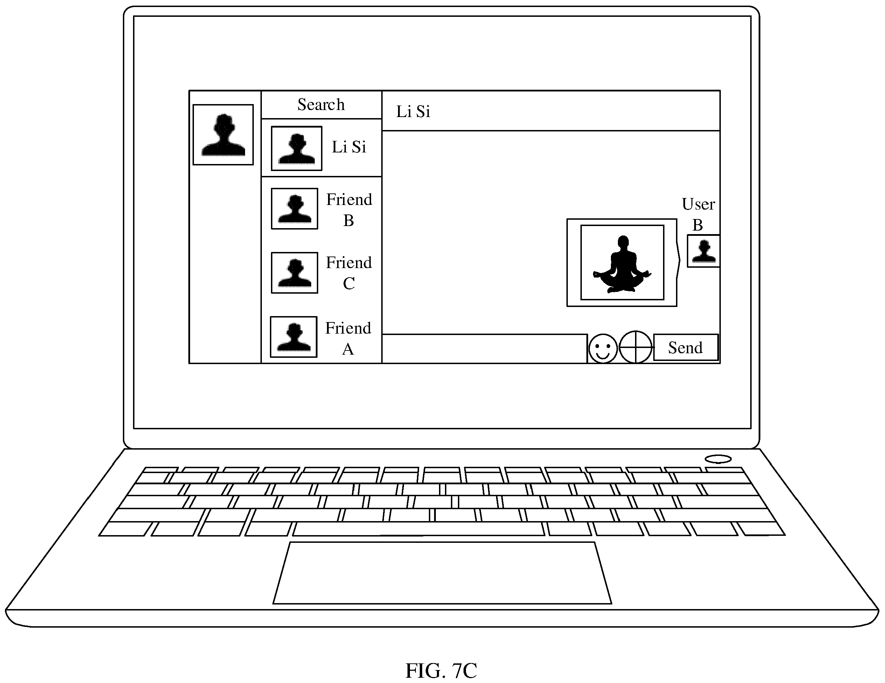

The first message further includes a first account, the first account is an account of a contact corresponding to the first contact option, and the first message is used to indicate the second electronic device to send the target data to the first account by using the first application. For example, with reference to FIG. 7B, if the user selects the option corresponding to Li Si, as shown in FIG. 7C, the notebook computer sends the picture A to an account of Li Si by using an account of a user B in the social application A.

It may be understood that if there is no first application (for example, the social application A) in the mobile phone 200 used by the user, or there is no first contact option (for example, the option corresponding to Li Si) in contact options of the account of the social application A, the user cannot directly send data in the mobile phone 200 to the first account (for example, the account of Li Si) by using the mobile phone 200. In this case, the user may send data to the account of Li Si by using another account (for example, the account of the user B is used, and contacts in the account of the user B include Li Si) that is in the second electronic device (for example, the notebook computer) and that is logged in to on the social application A. In this way, the user does not need to download the first application, or the user does not need to add an account of the first contact, and data can be sent to the account of the first contact.

Based on the foregoing technical solutions, in a case in which the first application is a social application, the first electronic device may display the plurality of contact options in the first application in response to the second operation performed by the user on the icon of the first application. In this way, the user does not need to operate the second electronic device, and the plurality of contact options in the first application can be displayed on the first electronic device. Then, in response to the third operation performed by the user on the first contact option, the first electronic device may send the first message including the first account to the second electronic device, so as to indicate the second electronic device to send the target data to the first account by using the first application. That is, the first electronic device may invoke the first application in the second electronic device to send the target data to the first account in response to the second operation and the third operation of the user. By using the method in this application, the user does not need to operate the second electronic device to perform a series of operations such as "opening the first application, finding the first contact, selecting the target data, and sending the target data to the first contact", and the first application in the second electronic device can be invoked to send the target data to the first account. In this way, a quantity of times of operations performed by the user can be reduced, and efficiency of processing the foregoing target data can be improved.

Because the plurality of applications in the first interface displayed on the mobile phone 200 include applications in the one or more electronic devices, if the plurality of applications in the first interface displayed on the mobile phone 200 include applications in a plurality of electronic devices, and a same application exists in the plurality of electronic devices (for example, the plurality of electronic devices include a notebook computer and a tablet computer, and a social application A is installed in both the notebook computer and the tablet computer), the user cannot determine an electronic device to which the used social application belongs.

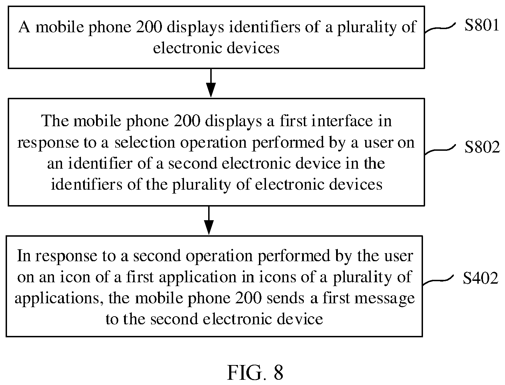

Based on the foregoing problem, an embodiment of this application provides a cross-device application invoking method. As shown in FIG. 8, the cross-device application invoking method may include S801 and S802.

S801: The mobile phone 200 displays identifiers of the plurality of electronic devices.

For example, as shown in FIG. 1B, the first area includes Zhang San's phone, Li Si's notebook, Wang Wu's phone, and Li liu's phone.

In a possible design, each of the plurality of electronic devices includes an application related to the target data.

In a possible implementation, after the mobile phone 200 sends the indication information of the file type of the target data to the plurality of electronic devices, each electronic device may receive the indication information. In addition, each electronic device may determine, based on the file type, whether an application that can process the target data is installed on the electronic device. If an application that can process the target data is installed in the electronic device, the electronic device may send a first feedback message to the mobile phone 200, where the first feedback message includes an icon of the application that can process the target data, and the first feedback message is used to indicate the mobile phone 200 to display an identifier of the electronic device. If no application that can process the target data is installed in the electronic device, the electronic device may send a second feedback message to the mobile phone 200, where the second feedback message is used to indicate the mobile phone 200 not to display the identifier of the electronic device.

It may be understood that if no application that can process the target data is installed in the electronic device, the user does not need to use the application in the electronic device. Therefore, the identifier of the electronic device may not be displayed in the mobile phone 200, which may help the user reduce options and improve user experience.

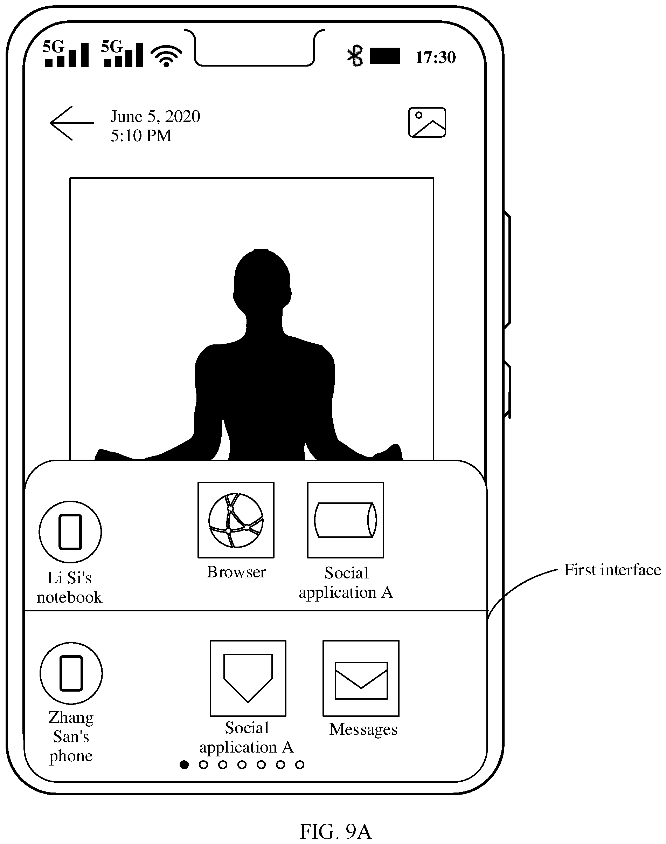

Optionally, the first interface further includes an identifier of an electronic device corresponding to each of the plurality of applications. For example, as shown in FIG. 9A, the first interface includes: a browser and a social application A installed in the notebook computer of Li Si, and the social application A and a Messages application installed in the mobile phone of Zhang San.

It may be understood that a same application may exist in one or more electronic devices. To distinguish applications in different electronic devices, an identifier of an electronic device corresponding to each application may be displayed on the first interface. In this way, the user may select an application based on an electronic device, so as to prevent the user from using the application in another electronic device, thereby improving accuracy of invoking the application by the user across devices.

S802: The mobile phone 200 displays the first interface in response to a selection operation performed by the user on an identifier of the second electronic device in the identifiers of the plurality of electronic devices.

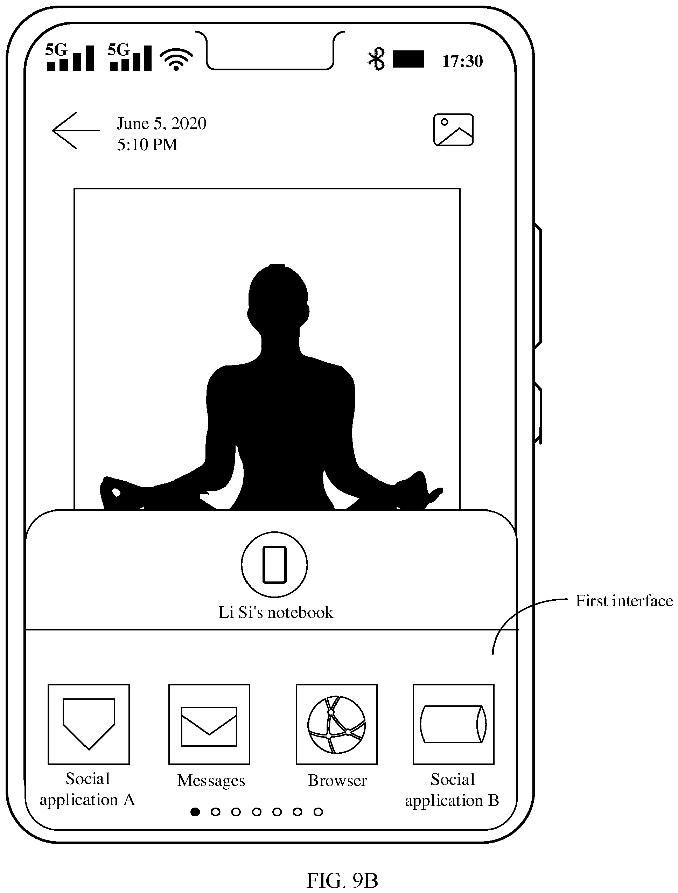

The icons of the plurality of applications included in the first interface are icons of applications that are in the second electronic device and related to the target data. That is, after the user selects the identifier of the second electronic device from the identifiers of the plurality of electronic devices, identifiers of applications in the first interface displayed on the mobile phone 200 are all icons of application installed in the second electronic device. For example, as shown in FIG. 9B, the first interface includes Browser, Social application A, Messages, and Social application B.

It may be understood that after the user selects the identifier of the second electronic device from the identifiers of the plurality of electronic devices, the mobile phone 200 further displays the icons of the applications included in the first interface, which can avoid displaying too many icons of applications on the first interface, and improve interface simplicity. In addition, only the icons of the applications installed on the second electronic device are displayed on the first interface. This can effectively help reduce options for the user, prevent the user from selecting from too many options, and improve user experience.

Based on the foregoing technical solutions, the first electronic device may first display the identifiers of the plurality of electronic devices. Generally, each electronic device includes a plurality of applications. Therefore, compared with displaying identifiers of a plurality of applications in the plurality of electronic devices on the first electronic device, the first electronic device displays only the identifiers of the plurality of electronic devices, so that options displayed by the first electronic device can be reduced, and interface simplicity can be improved. In addition, in response to the selection operation performed by the user on the identifier of the second electronic device in the identifiers of the plurality of electronic devices, the first electronic device further displays icons of applications related to the target data in the second electronic device. In this way, if the user knows that the electronic device used by the user is the second electronic device, the user only needs to perform a selection operation on the identifier of the second electronic device, and the icons of the applications in the second electronic device may be displayed on the first electronic device, so that the user selects an icon of a proper application from the icons of the plurality of applications in the second electronic device.

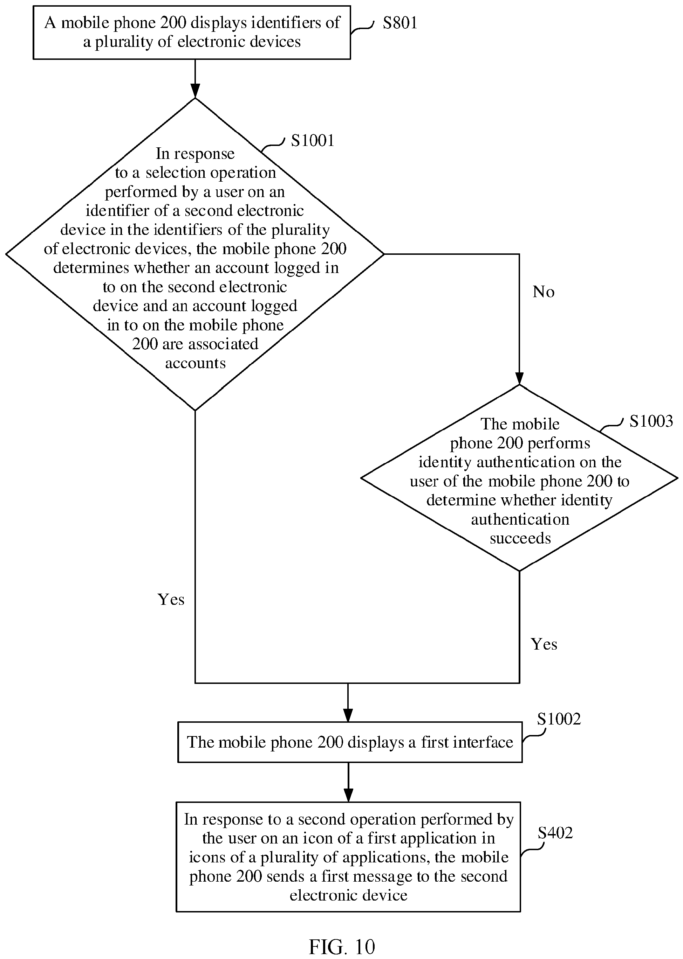

It may be understood that, in the solutions provided in this embodiment of this application, target data sharing, application sharing, and account information sharing are performed between electronic devices, and the data belongs to privacy content of the user. Therefore, to avoid leakage of user privacy, the following specifically describes S802. As shown in FIG. 10, S802 may include S1001 to S1003.

S1001: In response to the selection operation performed by the user on the identifier of the second electronic device in the identifiers of the plurality of electronic devices, the mobile phone 200 determines whether an account logged in to on the second electronic device and an account logged in to on the mobile phone 200 are associated accounts.

It should be noted that associated accounts mean that the account logged in to on the second electronic device and the account logged in to on the mobile phone 200 are a same account. For example, if the account logged in to on the notebook computer is "zhangsan", and the account logged in to on the mobile phone 200 is "zhangsan", the account logged in to on the notebook computer is the same as the account logged in to on the mobile phone 200, that is, the account logged in to on the notebook computer and the account logged in to on the mobile phone 200 are associated accounts. Alternatively, associated accounts mean that the account logged in to on the second electronic device is different from the account logged in to on the mobile phone 200, but there is an association between the account logged in to on the second electronic device and the account logged in to on the mobile phone 200. That there is an association between two different accounts includes: The account logged in to on the second electronic device is a family account of the account logged in to on the mobile phone 200, the account logged in to on the second electronic device is a friend account of the account logged in to on the mobile phone 200, or the like. Specifically, an association between two different accounts may be set by the user in the electronic device (the mobile phone 200 and/or the second electronic device). This is not limited in this embodiment of this application.

A login account of an electronic device may be a mobile phone number, a network name of the user, a network account of the user, or the like. This is not limited in this embodiment of this application. However, generally, the mobile phone 200 selects a unique identifier (such as a mobile phone number and a network account) as a login account, so as to improve verification accuracy.

It may be understood that, if the account logged in to on the second electronic device and the account logged in to on the mobile phone 200 are associated accounts, it indicates that the account logged in to on the second electronic device and the account logged in to on the mobile phone 200 are mutually trusted accounts. That is, when the icon of the application of the second electronic device is displayed on the mobile phone 200, privacy content of the second electronic device is not disclosed.

In a possible implementation, the mobile phone 200 sends, to the second electronic device, a message used to obtain the account logged in to on the second electronic device. After receiving the message, the second electronic device sends the account logged in to on the second electronic device to the mobile phone 200. The mobile phone 200 obtains the account logged in to on the second electronic device, compares the account logged in to on the second electronic device with the account logged in to on the mobile phone 200, and determines whether the account logged in to on the second electronic device and the account logged in to on the mobile phone 200 are associated accounts.

In another possible implementation, the mobile phone 200 sends the account logged in to on the mobile phone 200 to the second electronic device. After receiving the account logged in to on the mobile phone 200, the second electronic device compares the account logged in to on the second electronic device with the account logged in to on the mobile phone 200, and sends a comparison result to the mobile phone 200. The mobile phone 200 receives the comparison result, and determines, based on the comparison result, whether the account logged in to on the second electronic device and the account logged in to on the mobile phone 200 are associated accounts.

Optionally, after the mobile phone 200 determines whether the account logged in to on the second electronic device and the account logged in to on the mobile phone 200 are associated accounts, the mobile phone 200 determines whether the second electronic device can perform an operation of invoking an application across devices, and determines whether an application that can process the target data is installed in the second electronic device. If the mobile phone 200 determines that the second electronic device can perform the operation of invoking an application across devices, and the mobile phone 200 determines that the second electronic device is installed with an application that can process the target data, the mobile phone 200 performs S1002 or performs S1003. If the mobile phone 200 determines that the second electronic device cannot perform the operation of invoking an application across devices, or the mobile phone 200 determines that the second electronic device is not installed with an application that can process the target data, the mobile phone 200 does not display the first interface.

It should be noted that the mobile phone 200 may first determine whether the second electronic device can perform the operation of invoking an application across devices, and then determine whether an application that can process the target data is installed in the second electronic device. Alternatively, the mobile phone 200 may first determine whether an application that can process the target data is installed in the second electronic device, and then determine whether the second electronic device can perform the operation of invoking an application across devices. Alternatively, the mobile phone 200 may simultaneously determine whether an application that can process the target data is installed in the second electronic device, and determine whether the second electronic device can perform the operation of invoking an application across devices. This is not limited in this embodiment of this application.

In a possible design, if the account logged in to on the second electronic device and the account logged in to on the mobile phone 200 are associated accounts, the mobile phone 200 performs S 1002. If the account logged in to on the second electronic device and the account logged in to on the mobile phone 200 are not associated accounts, the mobile phone 200 performs S1003.

S1002: The mobile phone 200 displays the first interface.

It may be understood that, if the account logged in to on the second electronic device and the account logged in to on the mobile phone 200 are associated accounts, it indicates that a user of the second electronic device and a user of the mobile phone 200 are a same user, or there is a relationship between the user of the second electronic device and the user of the mobile phone 200. Therefore, when the icon of the application of the second electronic device is displayed on the first interface of the mobile phone 200, privacy content of the second electronic device is not disclosed. Therefore, the mobile phone 200 may display the first interface.

S1003: The mobile phone 200 performs identity authentication on the user of the mobile phone 200 to determine whether identity authentication succeeds.

It should be noted that before the mobile phone 200 performs identity authentication on the user of the mobile phone 200, the mobile phone 200 may send, to the second electronic device, a message used to query whether an operation of invoking an application across devices can be performed. After receiving the message, the second electronic device determines, by using a microphone (for example, voiceprint recognition) or a camera (for example, face recognition), whether a distance between the user of the second electronic device and the second electronic device is less than a second preset distance threshold.

If the distance between the user of the second electronic device and the second electronic device is less than the second preset distance threshold, the second electronic device sends, to the mobile phone 200, a message for indicating that the operation of invoking an application across devices can be performed. Then, the mobile phone 200 performs identity authentication on the user of the mobile phone 200.

If the distance between the user of the second electronic device and the second electronic device is greater than the second preset distance threshold, the second electronic device sends, to the mobile phone 200, a message for indicating that the operation of invoking an application across devices cannot be performed.

It may be understood that, in a case in which the account logged in to on the second electronic device and the account logged in to on the mobile phone 200 are not associated accounts, to avoid disclosure of privacy of the second electronic device, the distance between the user of the second electronic device and the second electronic device is required to be less than the second preset distance threshold, so as to ensure that when privacy content in the second electronic device is to be shared with the mobile phone 200, the user of the second electronic device is near the second electronic device, and the second electronic device can be operated at any time, thereby improving security of the second electronic device.

In a possible implementation, the mobile phone 200 displays a security verification interface. After the user enters verification information, the mobile phone 200 performs identity authentication on the user of the mobile phone 200 based on the verification information entered by the user.

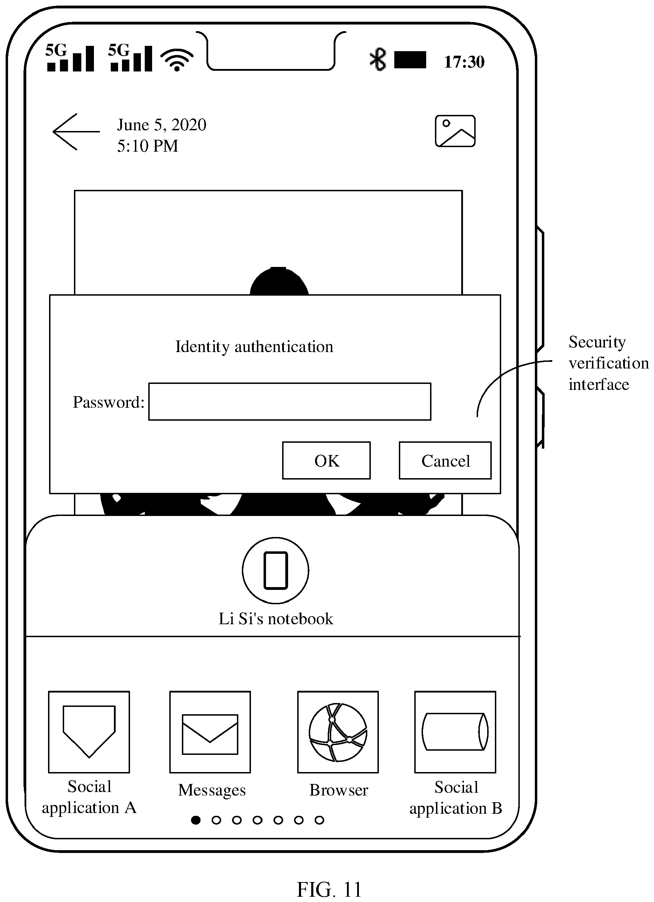

It should be noted that the verification information is used to verify whether the user of the mobile phone 200 is associated with the second electronic device. The verification information may be implemented in a form of a preset password, a preset problem, or the like, to perform identity authentication on the user of the mobile phone 200. The verification information is set by the second electronic device. For example, as shown in FIG. 11, after the user performs a selection operation on the option of Li Si's phone, the mobile phone 200 opens a security verification interface on the screen, and the user enters a preset password.

In some embodiments, after the user enters the verification information, the mobile phone 200 sends the verification information to the second electronic device. After the second electronic device receives the verification information, the second electronic device checks whether the verification information is correct, and sends a verification result to the mobile phone 200. The mobile phone 200 determines the identity of the user based on the verification result.

It may be understood that, in a case in which the account logged in to on the second electronic device and the account logged in to on the mobile phone 200 are not associated accounts, to avoid disclosure of privacy of the second electronic device, the mobile phone 200 may be used to perform authentication on the user, so as to ensure security of the electronic device.

In a possible design, if the mobile phone 200 determines that the identity authentication succeeds, the mobile phone 200 performs S1002.

It should be noted that if there is no electronic device that logs in to an account associated with the account logged in to on the mobile phone 200 and that is within a preset distance threshold of the mobile phone 200, and the user of the mobile phone 200 needs to process the target data by using the application in the second electronic device, and the account logged in to on the second electronic device and the account logged in to on the mobile phone 200 are not associated accounts, to ensure that the user can process the target data by using the application in the second electronic device, after the mobile phone 200 performs identity authentication on the user, and the identity authentication succeeds, the mobile phone 200 may display the first interface. In this way, not only the application in the second electronic device can be used by the user, but also privacy of the second electronic device is not disclosed.

It may be understood that, because the verification information is set by the second electronic device, if the identity authentication succeeds, it indicates that there is an association between the user of the mobile phone 200 and the second electronic device, and the user of the mobile phone 200 is a trusted user. Therefore, displaying the first interface by the mobile phone 200 does not cause privacy disclosure of the second electronic device.

If the mobile phone 200 determines that the identity authentication is not passed, that is, the identity authentication fails, the mobile phone 200 does not display the first interface.

It may be understood that if the identity authentication fails, it indicates that there is no association between the user of the mobile phone 200 and the second electronic device, and the user of the mobile phone 200 is not a trusted user. Therefore, the mobile phone 200 does not display the first interface, so as to ensure that privacy of the second electronic device is not disclosed.

It may be understood that an icon of an application in another electronic device is displayed in the first electronic device, that is, the first electronic device obtains privacy content in the another electronic device. Therefore, to avoid disclosure of privacy of a user of another electronic device, only when the account logged in to on the second electronic device and the account logged in to on the first electronic device are associated accounts, the first electronic device can display the icon of the application in the second electronic device. If the account logged in to on the second electronic device and the account logged in to on the first electronic device are not associated accounts, it indicates that the second electronic device does not trust the first electronic device. Therefore, the first electronic device needs to perform identity authentication on the user of the first electronic device. If identity authentication succeeds, the first electronic device may display the icon of the application in the second electronic device. In this way, an electronic device that is not trusted by the second electronic device can be prevented from obtaining privacy content of the second electronic device, thereby ensuring privacy of the user.

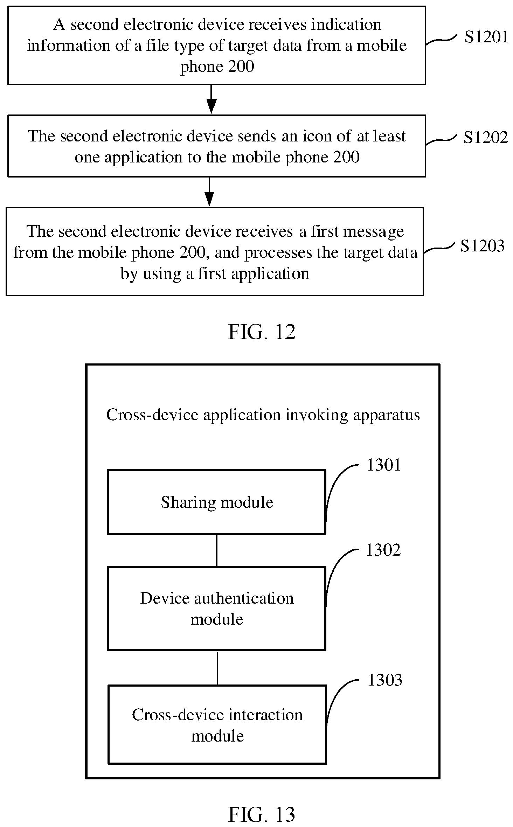

An embodiment of this application provides a cross-device application invoking method. As shown in FIG. 12, the cross-device application invoking method may include S1201 to S1203.

S1201: A second electronic device receives indication information of a file type of target data from a mobile phone 200.

S1202: The second electronic device sends an icon of at least one application to the mobile phone 200.

The at least one application includes an application related to the target data in the second electronic device, and a distance between the second electronic device and the mobile phone 200 is less than a preset distance threshold.

Optionally, the second electronic device may determine, from applications installed in the second electronic device based on the file type of the target data, an application that can process the target data, and send an icon of the application that can process the target data to the mobile phone 200. In this way, the mobile phone 200 receives the icon of the application that can process the target data, thereby reducing options in the first interface displayed on the mobile phone 200.

S1203: The second electronic device receives a first message from the mobile phone 200, and processes the target data by using a first application.

The first message includes the target data, the first application is an application in the at least one application, and the first message is used to indicate the second electronic device to process the target data by using the first application.

In a possible design, the first application is a social application. Before the second electronic device receives the first message from the mobile phone 200, the second electronic device sends information about a plurality of contacts in the first application to the mobile phone 200. The information about the plurality of contacts is used to display a plurality of contact options of the first application, and each contact option is corresponding to one contact in the first application.

In a possible implementation, in a case in which the first message further includes a first account, the second electronic device receives the first message from the mobile phone 200, and sends the target data to the first account by using the first application.

It may be understood that after receiving the first message from the mobile phone 200, the second electronic device may send the target data to the first account by using the first application, without performing an operation on the second electronic device by the user. Therefore, when the user needs to perform a series of operations by using a plurality of electronic devices, the technical solutions of this application can reduce a quantity of operations of the user and improve work efficiency of the user.

Optionally, after the second electronic device processes the target data by using the first application, the second electronic device may send a sharing result to the mobile phone 200, so as to notify the mobile phone 200 that the second electronic device has processed the target data by using the first application. In this way, the user may be notified in time that the second device has completed the operation, thereby improving user experience.

Based on the foregoing technical solutions, the second electronic device may send, to the first electronic device based on the received file type of the target data, the application related to the target data. In this way, a quantity of applications sent by the second electronic device to the first electronic device can be reduced, so that icons of fewer applications are displayed in the first electronic device, and options are reduced and user experience is improved. In addition, after receiving the first message from the first electronic device, the second electronic device may process the target data by using the first application, and the user does not need to perform an operation on the second electronic device. Therefore, when the user needs to perform a series of operations by using a plurality of electronic devices, the technical solutions of this application can reduce a quantity of operations of the user and improve work efficiency of the user.

The foregoing mainly describes the solutions provided in the embodiments of this application from a perspective of an electronic device. It may be understood that, to implement the foregoing functions, the electronic device includes a hardware structure and/or a software module corresponding to each function. A person skilled in the art should readily recognize that, with reference to the examples described in the embodiments disclosed in this application, the steps of the cross-device application invoking method may be implemented in a form of hardware or a combination of hardware and computer software in this application. Whether a function is executed in a hardware or electronic device software-driven hardware manner depends on a specific application and design constraint condition of a technical solution. A person skilled in the art may use different methods for each specific application to implement the described functions, but this implementation should not be considered to be beyond the scope of this application.

In embodiments of this application, a function module or a function unit of the cross-device application invoking apparatus may be divided according to the foregoing method example. For example, each function module or function unit may be obtained through division corresponding to each function, or two or more functions may be integrated into one processing module. The foregoing integrated module may be implemented in a form of hardware, or may be implemented in a form of a software functional module or unit. In embodiments of this application, module or unit division is exemplary, and is merely logical function division. In actual implementation, there may be another division manner.

FIG. 13 is a schematic diagram of a cross-device application invoking apparatus according to an embodiment of this application. The cross-device application invoking apparatus may be a functional module that is in the foregoing electronic device (such as the mobile phone 200) and is configured to implement the method in the embodiments of this application. As shown in FIG. 13, the cross-device application invoking apparatus may include a sharing module 1301, a device authentication module 1302, and a cross-device interaction module 1303.

The sharing module 1301 is configured to support the mobile phone 200 in obtaining target data, selecting a target device (for example, the second electronic device), selecting a first application in the target device, and selecting a first contact in the first application in the target device. For example, the sharing module 1301 is configured to support the mobile phone 200 in executing S401, S601, S801, S802, S1002, and S1203 in the method embodiments, and/or another process of the technology described in this specification. For example, functions of the user identification module 1201 may be implemented by using a processor 210, an internal memory 221, an external memory 220, a display 294, and the like of the mobile phone 200.

The device authentication module 1302 is configured to support the mobile phone 200 in verifying whether an account logged in to on the mobile phone 200 is associated with accounts logged in to on one or more electronic devices. For example, the device authentication module 1302 is configured to support the mobile phone 200 in executing S1001, S1003, S901, and S1002 in the foregoing method embodiments, and/or another process of the technology described in this specification. For example, functions of the device authentication module 1302 may be implemented by using a microphone 270C, a camera 293, the processor 210, and the like of the mobile phone 200.

The cross-device interaction module 1303 is configured to support the mobile phone 200 in performing information interaction with one or more electronic devices, obtaining accounts logged in to on the one or more electronic devices, and obtaining a plurality of pieces of contact information of the first application. For example, the cross-device interaction module 1303 is configured to support the mobile phone 200 in executing S402, S602, S1201, and S 1202 in the foregoing method embodiments, and/or another process of the technology described in this specification. For example, functions of the cross-device interaction module 1303 may be implemented by using the processor 210, a mobile communications module 250, a wireless communications module 260, and the like of the mobile phone 200.

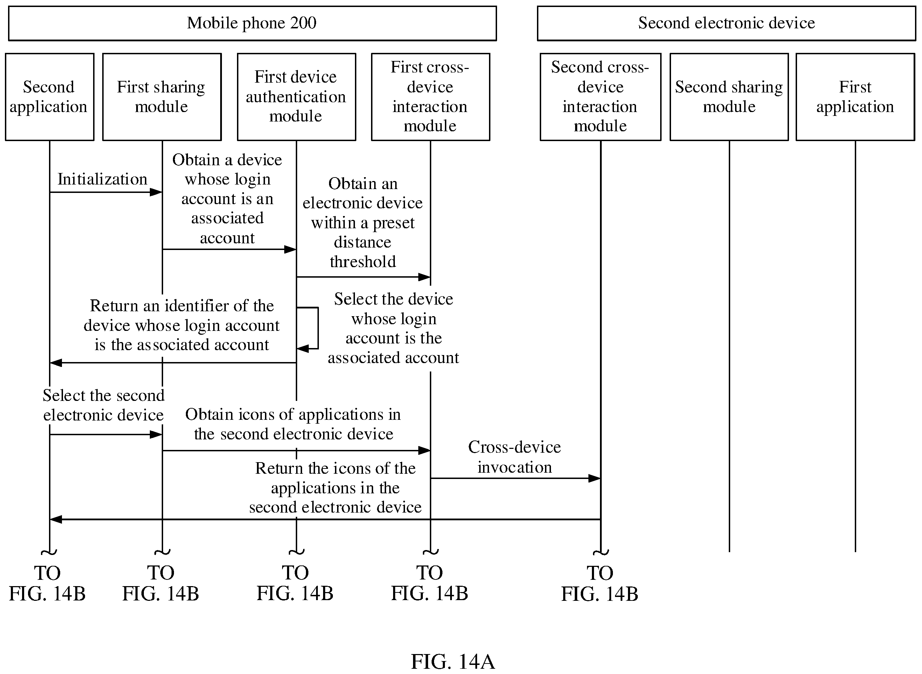

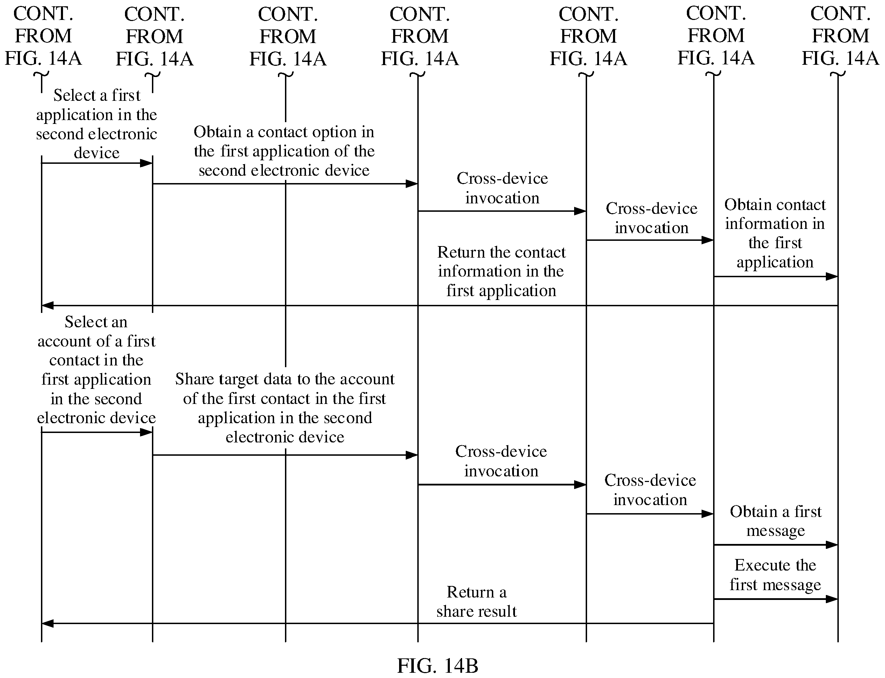

For example, the first electronic device is the mobile phone 200. FIG. 14A and FIG. 14B show a schematic flowchart of a cross-device application invoking method according to an embodiment of this application. The mobile phone 200 includes a second application, a first sharing module, a first device authentication module, and a first cross-device interaction module. A second electronic device includes a second cross-device interaction module, a second sharing module, and a first application. The second application first initializes, and sends target data to the first sharing module. The first sharing module obtains a device whose account is associated with an account logged in to on the mobile phone 200, and sends the device to the first device authentication module. The first device authentication module obtains an electronic device within a preset distance threshold (that is, a distance between the mobile phone 200 and another electronic device is less than the preset distance threshold). The first device authentication module selects the device whose login account is an associated account, and sends an identifier of the device whose login account is an associated account to the second application. The second application selects the second electronic device; the first sharing module obtains icons of applications in the second electronic device, sends the icons to the first cross-device interaction module, and the icons are invoked by the first cross-device interaction module across devices. Then, the second cross-device interaction module returns the icons of the applications in the second electronic device to the second application. Then, the second application selects the first application in the second electronic device, and the first sharing module requests to obtain a contact option in the first application of the second electronic device. Then, the first cross-device interaction module performs cross-device invoking across devices. The second sharing module requests to obtain contact information in the first application, and the first application returns the contact information to the second application. Then, the second application selects an account of a first contact in the first application in the second electronic device. After determining the account of the first contact, the first sharing module shares the target data with the account of the first contact in the first application in the second electronic device. Specifically, the first cross-device interaction module may complete message interaction with the second cross-device interaction module. After the second sharing module sends a first message to the first application, the first application executes the first message, and the second sharing module may send a share result (that is, a result of executing the first message) to the second application.

Other embodiments of this application provide an electronic device (the mobile phone 200 shown in FIG. 2), and a plurality of preset applications are installed in the electronic device. The electronic device may include a memory and one or more processors. The memory and the processor are coupled. The electronic device may further include a camera. Alternatively, the electronic device may be externally connected to a camera. The memory is configured to store computer program code, and the computer program code includes computer instructions. When the computer instructions are executed by the processor, the electronic device can perform functions or steps executed by the mobile phone in the foregoing method embodiments. For example, for a structure of the electronic device, refer to the structure of the mobile phone 200 shown in FIG. 2.

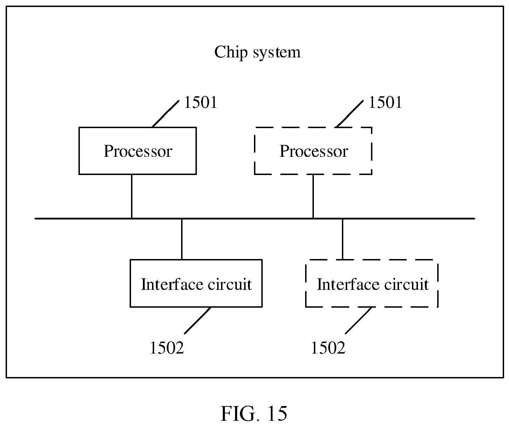

The embodiments of this application further provide a chip system. As shown in FIG. 15, the chip system includes at least one processor 1501 and at least one interface circuit 1502. The processor 1501 and the interface circuit 1502 may be interconnected through a line. For example, the interface circuit 1502 may be configured to receive a signal from another apparatus (for example, a memory of an electronic device). For another example, the interface circuit 1502 may be configured to send a signal to another apparatus (for example, the processor 1501). For example, the interface circuit 1502 may read instructions stored in the memory, and send the instructions to the processor 1501. When the instructions are executed by the processor 1501, the electronic device (for example, the mobile phone 200 in FIG. 2) can perform steps in the foregoing embodiments. Certainly, the chip system may further include another discrete component. This is not specifically limited in this embodiment of this application.

The embodiments of this application further provide a computer storage medium. The computer storage medium includes computer instructions. When the computer instructions are run on the foregoing electronic device (for example, the mobile phone 200 in FIG. 2), the electronic device performs functions or steps executed by the mobile phone in the foregoing method embodiments.

The embodiments of this application further provide a computer program product. When the computer program product runs on a computer, the computer is enabled to execute functions or steps executed by the mobile phone in the foregoing method embodiments.

It may be clearly understood by a person skilled in the art from the foregoing description of the implementations that, for convenience and brevity of the description, division of the foregoing functional modules is merely used as an example for description. In actual application, the foregoing functions may be allocated to different functional modules based on a requirement, that is, an internal structure of the apparatus is divided into different functional modules, so as to complete all or some of the functions described above.

In the embodiments provided in this application, it should be understood that the disclosed apparatuses and methods may be implemented in another manner. For example, the described apparatus embodiment is merely an example. For example, the module or unit division is merely logical function division. In actual implementation, there may be another division manner. For example, a plurality of units or components may be combined or integrated into another apparatus, or some features may be ignored or not performed. In addition, the displayed or discussed mutual coupling or direct coupling or communication connections may be implemented by using some interfaces. The indirect coupling or communication connections between the apparatuses or units may be implemented in electronic, mechanical, or other forms.

The units described as separate parts may or may not be physically separate, and parts displayed as units may be one physical unit or may be a plurality of physical units, may be located at one position, or may be distributed on a plurality of different places. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit. The foregoing integrated unit may be implemented in a form of hardware, or may be implemented in a form of a software functional unit.

When an integrated unit is implemented in a form of a software functional unit and sold or used as an independent product, the integrated unit may be stored in a readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a device (which may be a single-chip processor, a chip, or the like) or a processor (processor) to perform all or some of the steps of the methods described in the embodiments of this application. The foregoing storage medium includes any medium that can store program code, for example, a USB flash drive, a removable hard disk, a read-only memory (read only memory, ROM), a random access memory (random access memory, RAM), a magnetic disk, or an optical disc.

## Claims

1. A cross-device application invoking method, applied to a first electronic device, wherein the method comprises:
in response to a first operation performed by the user on target data, sending, by the first electronic device, indication information of a file type of the target data to one or more electronic devices, wherein the first electronic device determines the file type of the target data based on a file extension name of the target data, wherein the one or more electronic devices does not comprise the first electronic device, and wherein the one or more electronic devices comprises a second electronic device, and wherein a distance between the one or more electronic devices and the first electronic device is less than a preset distance threshold;
receiving, by the first electronic device, icons of a plurality of applications from the one or more electronic devices, wherein the plurality of applications are applications that are in the one or more electronic devices related to the target data in the one or more electronic devices, wherein the plurality of applications comprise a first application that is not installed in the first electronic device, wherein the icons of the plurality of applications comprises an icon of the first application sent from the second electronic device, and wherein the second device determined, based on the file type of the target data, that the first application installed on the second electronic device is an application that can process the target data;
displaying (S401), by the first electronic device, a first interface on the first electronic device, the first interface comprising the icons of the plurality of applications;
and
sending (S402), by the first electronic device, a first message to the second electronic device in response to a second operation performed by the user on the icon of the first application in the icons of the plurality of applications, wherein the first message comprises the target data, and the first message is used to indicate the second electronic device to process the target data by using the first application.

2. The method according to claim 1, wherein the first application is a social application; and
the sending, by the first electronic device, a first message to a second electronic device in response to a second operation performed by the user on an icon of a first application in the icons of the plurality of applications comprises:
displaying, by the first electronic device, a second interface in response to the second operation performed by the user on the icon of the first application, wherein the second interface comprises a plurality of contact options of the first application, and each contact option is corresponding to one contact in the first application; and
sending, by the first electronic device, the first message to the second electronic device in response to a third operation performed by the user on a first contact option in the second interface, wherein
the first message further comprises a first account, the first account is an account of a contact corresponding to the first contact option, and the first message is used to indicate the second electronic device to send the target data to the first account by using the first application.

3. The method according to claim 1 or 2, wherein the first interface further comprises an identifier of an electronic device corresponding to each of the plurality of applications.

4. The method according to claim 1 to 3, wherein the one or more electronic devices comprise a plurality of electronic devices; and
after the receiving, by the first electronic device, the icons of the plurality of applications from the one or more electronic devices, and before the displaying, by the first electronic device, the first interface comprising the icons of the plurality of applications, the method further comprises:
displaying, by the first electronic device, identifiers of the plurality of electronic devices; and
displaying, by the first electronic device, the first interface in response to a selection operation performed by the user on an identifier of the second electronic device in the identifiers of the plurality of electronic devices, wherein
the icons of the plurality of applications comprised in the first interface are icons of applications that are in the second electronic device and related to the target data.

5. The method according to any one of claims 1 to 4, wherein that the plurality of applications comprise applications that are in one or more electronic devices and related to the target data is specifically:
the plurality of applications comprise applications that are in the one or more electronic devices and that are related to the target data and are not installed in the first electronic device.

6. The method according to any one of claims 1 to 5, wherein the icons of the plurality of applications further comprise an icon of an application that is in the first electronic device and related to the target data.

7. The method according to claim 5, wherein the displaying, by the first electronic device, the first interface in response to a selection operation performed by the user on an identifier of the second electronic device in the identifiers of the plurality of electronic devices comprises:
in response to the selection operation performed by the user on the identifier of the second electronic device in the identifiers of the plurality of electronic devices determining by the first electronic device whether an account logged in to on the second electronic device and an account logged in to on the electronic device are associated accounts, and displaying, by the first electronic device, the first interface if an account logged in to on the second electronic device and an account logged in to on the first electronic device are associated accounts, wherein associated accounts mean that the account logged in to on the second electronic device and the account logged in to on the first electronic device are a same account, or wherein associated accounts mean that the account logged in to on the second electronic device is different from the account logged in to on first electronic device, but there is an association between the account logged in to on the second electronic device and the account logged in to on the first electronic device, comprising: the account logged in to on the second electronic device is a family account of the account logged in to on the first electronic device, or the account logged in to on the second electronic device is a friend account of the account logged in to on the first electronic device; or
if the account logged in to on the second electronic device and the account logged in to on the first electronic device are not associated accounts, performing, by the first electronic device, identity authentication on the user of the first electronic device; and if the identity authentication succeeds, displaying, by the first electronic device, the first interface, and wherein if the identity authentication succeeds, it indicates that there is an association between the user of the first electronic device and the second electronic device, and the user of the first electronic device is a trusted user, and wherein if the identity authentication fails, it indicates that there is no association between the user of the first electronic device and the second electronic device, and the user of the first electronic device is not a trusted user, and the first electronic device does not display the first interface.

8. A cross-device application invoking method, applied to a second electronic device, wherein the method comprises:
receiving (S1201), by the second electronic device, indication information of a file type of target data from a first electronic device, wherein the file type of the target data was determined by the first electronic device based on a file extension name of the target data;
determining, by the second device, based on the file type of the target data, that a first application installed on the second electronic device is an application that can process the target data;
sending (S1202), by the second electronic device, an icon of the first application to the first electronic device, wherein the first application is not installed in the first electronic device, and a distance between the second electronic device and the first electronic device is less than a preset distance threshold; and
receiving (S402, S1203), by the second electronic device, a first message from the first electronic device, and processing the target data by using the first application, wherein the first message comprises the target data, and the first message is used to indicate the second electronic device to process the target data by using the first application.

9. The method according to claim 8, wherein the first application is a social application; and before the receiving, by the second electronic device, a first message from the first electronic device, the method further comprises:
sending, by the second electronic device, information about a plurality of contacts in the first application to the first electronic device, wherein the information about the plurality of contacts is used to display a plurality of contact options of the first application, and each contact option is corresponding to one contact in the first application.

10. The method according to claim 8 or 9, wherein the first message further comprises a first account, and
the receiving, by the second electronic device, a first message from the first electronic device, and processing the target data by using a first application comprises:
receiving, by the second electronic device, the first message from the first electronic device, and sending the target data to the first account by using the first application.

11. An electronic device, wherein the electronic device is a first electronic device; the first electronic device comprises a memory and a processor, and the memory is coupled to the processor; the memory is configured to store computer program code, and the computer program code comprises computer instructions; and when the computer instructions are executed by the processor, causes the first electronic device to perform the cross-device application invoking method according to any one of claims 1 to 7.

12. An electronic device, wherein the electronic device is a second electronic device; the second electronic device comprises a memory and a processor, and the memory is coupled to the processor; the memory is configured to store computer program code, and the computer program code comprises computer instructions; and when the computer instructions are executed by the processor, causes the second electronic device to perform the cross-device application invoking method according to any one of claims 8 to 10.

13. A computer storage medium, comprising computer instructions, wherein when the computer instructions are run on an electronic device, the electronic device is enabled to perform the method according to any one of claims 1 to 10.

14. A computer program product, wherein when the computer program product runs on a computer, the computer is enabled to perform the method according to any one of claims 1 to 10.

## Patentansprüche

1. Vorrichtungsübergreifendes Anwendungsaufrufverfahren, das auf eine erste elektronische Vorrichtung angewendet wird, wobei das Verfahren umfasst:
als Reaktion auf eine erste Operation, die durch den Benutzer an den Zieldaten durchgeführt wird, Senden, durch die erste elektronische Vorrichtung, von Angabeinformationen eines Dateityps der Zieldaten an eine oder mehrere elektronische Vorrichtungen, wobei die erste elektronische Vorrichtung den Dateityp der Zieldaten basierend auf einem Dateierweiterungsnamen der Zieldaten bestimmt, wobei die eine oder die mehreren elektronischen Vorrichtungen nicht die erste elektronische Vorrichtung umfassen, und wobei die eine oder die mehreren elektronischen Vorrichtungen eine zweite elektronische Vorrichtung umfassen, und wobei ein Abstand zwischen der einen oder den mehreren elektronischen Vorrichtungen und der ersten elektronischen Vorrichtung geringer als ein voreingestellter Abstandsschwellenwert ist;
Empfangen, durch die erste elektronische Vorrichtung, von Symbolen einer Vielzahl von Anwendungen von der einen oder den mehreren elektronischen Vorrichtungen, wobei die Vielzahl von Anwendungen Anwendungen sind, die sich in der einen oder den mehreren elektronischen Vorrichtungen befinden und auf die Zieldaten in der einen oder den mehreren elektronischen Vorrichtungen beziehen, wobei die Vielzahl von Anwendungen eine erste Anwendung umfasst, die nicht auf der ersten elektronischen Vorrichtung installiert ist, wobei die Symbole der Vielzahl von Anwendungen ein Symbol der ersten Anwendung umfassen, das von der zweiten elektronischen Vorrichtung gesendet wurde, und wobei die zweite Vorrichtung basierend auf dem Dateityp der Zieldaten bestimmt hat, dass die erste Anwendung, die auf der zweiten elektronischen Vorrichtung installiert ist, eine Anwendung ist, die die Zieldaten verarbeiten kann;
Anzeigen (S401), durch die erste elektronische Vorrichtung, einer ersten Schnittstelle auf der ersten elektronischen Vorrichtung, die erste Schnittstelle umfassend die Symbole der Vielzahl von Anwendungen;
und
Senden (S402), durch die erste elektronische Vorrichtung, einer ersten Nachricht an die zweite elektronische Vorrichtung als Reaktion auf eine zweite Operation, die durch den Benutzer an dem Symbol der ersten Anwendung in den Symbolen der Vielzahl von Anwendungen durchgeführt wird, wobei die erste Nachricht die Zieldaten umfasst und die erste Nachricht verwendet wird, um der zweiten elektronischen Vorrichtung anzugeben, die Zieldaten durch Verwenden der ersten Anwendung zu verarbeiten.

2. Verfahren nach Anspruch 1, wobei die erste Anwendung eine soziale Anwendung ist; und das Senden, durch die erste elektronische Vorrichtung, einer ersten Nachricht an eine zweite elektronische Vorrichtung als Reaktion auf eine zweite Operation, die durch den Benutzer an einem Symbol einer ersten Anwendung in den Symbolen der Vielzahl von Anwendungen durchgeführt wird, umfasst:
Anzeigen, durch die erste elektronische Vorrichtung, einer zweiten Schnittstelle als Reaktion auf die zweite Operation, die durch den Benutzer an dem Symbol der ersten Anwendung durchgeführt wird, wobei die zweite Schnittstelle eine Vielzahl von Kontaktoptionen der ersten Anwendung umfasst und jede Kontaktoption einem Kontakt in der ersten Anwendung entspricht; und
Senden, durch die erste elektronische Vorrichtung, der ersten Nachricht an die zweite elektronische Vorrichtung als Reaktion auf eine dritte Operation, die durch den Benutzer an einer ersten Kontaktoption in der zweiten Schnittstelle durchgeführt wird, wobei
die erste Nachricht ferner ein erstes Konto umfasst, wobei das erste Konto ein Konto eines Kontakts ist, der der ersten Kontaktoption entspricht, und die erste Nachricht verwendet wird, um der zweiten elektronischen Vorrichtung anzugeben, die Zieldaten durch Verwenden der ersten Anwendung an das erste Konto zu senden.

3. Verfahren nach Anspruch 1 oder 2, wobei die erste Schnittstelle ferner einen Identifizierer einer elektronischen Vorrichtung umfasst, der jeder der Vielzahl von Anwendungen entspricht.

4. Verfahren nach Anspruch 1 bis 3, wobei die eine oder die mehreren elektronischen Vorrichtungen eine Vielzahl von elektronischen Vorrichtungen umfassen; und
nach dem Empfangen, durch die erste elektronische Vorrichtung, der Symbole der Vielzahl von Anwendungen von einer oder mehreren elektronischen Vorrichtungen und vor dem Anzeigen, durch die erste elektronische Vorrichtung, der ersten Schnittstelle, umfassend die Symbole der Vielzahl von Anwendungen, wobei das Verfahren ferner umfasst:
Anzeigen, durch die erste elektronische Vorrichtung, von Identifizierern der Vielzahl von elektronischen Vorrichtungen; und
Anzeigen, durch die erste elektronische Vorrichtung, der ersten Schnittstelle als Reaktion auf eine Auswahloperation, die durch den Benutzer an einem Identifizierer der zweiten elektronischen Vorrichtung in den Identifizierern der Vielzahl von elektronischen Vorrichtungen durchgeführt wird, wobei
die Symbole der Vielzahl von Anwendungen, die in der ersten Schnittstelle enthalten sind, Symbole von Anwendungen sind, die sich in der zweiten elektronischen Vorrichtung befinden und auf die Zieldaten beziehen.

5. Verfahren nach einem der Ansprüche 1 bis 4, wobei die Vielzahl von Anwendungen Anwendungen umfasst, die sich in einer oder mehreren elektronischen Vorrichtungen befinden und sich auf die Zieldaten beziehen, speziell ist:
die Vielzahl von Anwendungen Anwendungen umfasst, die sich auf ein oder mehrere elektronische Vorrichtungen befinden und sich auf die Zieldaten beziehen und nicht auf der ersten elektronischen Vorrichtung installiert sind.

6. Verfahren nach einem der Ansprüche 1 bis 5, wobei die Symbole der Vielzahl von Anwendungen ferner ein Symbol einer Anwendung umfassen, die sich auf der ersten elektronischen Vorrichtung befindet und sich auf die Zieldaten bezieht.

7. Verfahren nach Anspruch 5, wobei das Anzeigen, durch die erste elektronische Vorrichtung, der ersten Schnittstelle als Reaktion auf eine Auswahloperation, die durch den Benutzer an einem Identifizierer der zweiten elektronischen Vorrichtung in den Identifizierern der Vielzahl von elektronischen Vorrichtungen durchgeführt wird, umfasst:
als Reaktion auf die Auswahloperation, die durch den Benutzer an dem Identifizierer der zweiten elektronischen Vorrichtung in den Identifizierern der Vielzahl von elektronischen Vorrichtungen durchgeführt wird, Bestimmen durch die erste elektronische Vorrichtung, ob ein Konto, das auf der zweiten elektronischen Vorrichtung angemeldet ist, und ein Konto, der auf der elektronischen Vorrichtung angemeldet ist, verknüpfte Konten sind, und Anzeigen, durch die erste elektronische Vorrichtung, der ersten Schnittstelle, falls ein Konto, das auf der zweiten elektronischen Vorrichtung angemeldet ist, und ein Konto, das auf der ersten elektronischen Vorrichtung angemeldet ist verknüpfte Konten sind, wobei verknüpfte Konten bedeuten, dass das Konto, das auf der zweiten elektronischen Vorrichtung angemeldet ist, und das Konto, das auf der ersten elektronischen Vorrichtung angemeldet ist, das gleiche Konto sind, oder wobei verknüpfte Konten bedeuten, dass das Konto, das auf der zweiten elektronischen Vorrichtung angemeldet ist, sich von dem Konto unterscheidet, das auf der ersten elektronischen Vorrichtung angemeldet ist, aber eine Verknüpfung zwischen dem Konto, das auf der zweiten elektronischen Vorrichtung angemeldet ist, und dem Konto besteht, das auf der ersten elektronischen Vorrichtung angemeldet ist, umfassend: das Konto, das auf der zweiten elektronischen Vorrichtung angemeldet ist, ein Familienkonto des Kontos ist, auf der ersten elektronischen Vorrichtung angemeldet ist, oder das Konto, das auf der zweiten elektronischen Vorrichtung angemeldet ist, ein Freundeskonto des Kontos ist, das auf der ersten elektronischen Vorrichtung angemeldet ist; oder
falls das Konto, das auf der zweiten elektronischen Vorrichtung angemeldet ist, und das Konto, das auf der ersten elektronischen Vorrichtung angemeldet ist, keine verknüpften Konten sind, Durchführen, durch die erste elektronische Vorrichtung, einer Identitätsauthentifizierung für den Benutzer der ersten elektronischen Vorrichtung; und falls die Identitätsauthentifizierung erfolgreich ist, Anzeigen, durch die erste elektronische Vorrichtung, der ersten Schnittstelle, und wobei, falls die Identitätsauthentifizierung erfolgreich ist, dies angibt, dass eine Verknüpfung zwischen dem Benutzer der ersten elektronischen Vorrichtung und der zweiten elektronischen Vorrichtung besteht und der Benutzer der ersten elektronischen Vorrichtung ein vertrauenswürdiger Benutzer ist, und wobei, falls die Identitätsauthentifizierung fehlschlägt, dies angibt, dass keine Verknüpfung zwischen dem Benutzer der ersten elektronischen Vorrichtung und der zweiten elektronischen Vorrichtung besteht und der Benutzer der ersten elektronischen Vorrichtung kein vertrauenswürdiger Benutzer ist und die erste elektronische Vorrichtung die erste Schnittstelle nicht anzeigt.

8. Vorrichtungsübergreifendes Anwendungsaufrufverfahren, das auf eine zweite elektronische Vorrichtung angewendet wird, wobei das Verfahren umfasst:
Empfangen (S1201), durch die zweite elektronische Vorrichtung, von Angabeinformationen eines Dateityps von Zieldaten von einer ersten elektronischen Vorrichtung, wobei der Dateityp der Zieldaten durch die erste elektronische Vorrichtung basierend auf einem Dateierweiterungsnamen der Zieldaten bestimmt wurde;
Bestimmen, durch die zweite Vorrichtung, basierend auf dem Dateityp der Zieldaten, dass eine erste Anwendung, die auf der zweiten elektronischen Vorrichtung installiert ist, eine Anwendung ist, die die Zieldaten verarbeiten kann;
Senden (S1202),durch die zweite elektronische Vorrichtung, eines Symbols der ersten Anwendung an die erste elektronische Vorrichtung, wobei die erste Anwendung nicht in der ersten elektronischen Vorrichtung installiert ist und ein Abstand zwischen der zweiten elektronischen Vorrichtung und der ersten elektronischen Vorrichtung geringer als ein voreingestellter Abstandsschwellenwert ist; und
Empfangen (S402, S1203), durch die zweite elektronische Vorrichtung, einer ersten Nachricht von der ersten elektronischen Vorrichtung und Verarbeiten der Zieldaten durch Verwenden der ersten Anwendung, wobei die erste Nachricht die Zieldaten umfasst und die erste Nachricht verwendet wird, um der zweiten elektronischen Vorrichtung anzugeben, die Zieldaten durch Verwenden der ersten Anwendung zu verarbeiten.

9. Verfahren nach Anspruch 8, wobei die erste Anwendung eine soziale Anwendung ist; und wobei vor dem Empfangen, durch die elektronische Vorrichtung, einer ersten Nachricht von der ersten elektronischen Vorrichtung das Verfahren ferner umfasst:
Senden, durch die zweite elektronische Vorrichtung, von Informationen über eine Vielzahl von Kontakten in der ersten Anwendung an die erste elektronische Vorrichtung, wobei die Informationen über die Vielzahl von Kontakten verwendet werden, um eine Vielzahl von Kontaktoptionen der ersten Anwendung anzugeben, und jede Kontaktoption einem Kontakt in der ersten Anwendung entspricht.

10. Verfahren nach Anspruch 8 oder 9, wobei die erste Nachricht ferner ein erstes Konto umfasst, und
das Empfangen, durch die zweite elektronische Vorrichtung, einer ersten Nachricht von der ersten elektronischen Vorrichtung und das Verarbeiten der Zieldaten durch Verwenden einer ersten Anwendung umfasst:
Empfangen, durch die zweite elektronische Vorrichtung, der ersten Nachricht von der ersten elektronischen Vorrichtung und Senden der Zieldaten an das erste Konto durch Verwenden der ersten Anwendung.

11. Elektronische Vorrichtung, wobei die elektronische Vorrichtung eine erste elektronische Vorrichtung ist; die erste elektronische Vorrichtung einen Speicher und einen Prozessor umfasst, und der Speicher mit dem Prozessor gekoppelt ist; der Speicher konfiguriert ist, um Computerprogrammcode zu speichern, und der Computerprogrammcode Computeranweisungen umfasst; und wenn die Computeranweisungen durch den Prozessor ausgeführt werden, die erste elektronische Vorrichtung veranlasst wird, das vorrichtungsübergreifende Anwendungsaufrufverfahren nach einem der Ansprüche 1 bis 7 durchzuführen.

12. Elektronisches Vorrichtung, wobei die elektronische Vorrichtung eine zweite elektronische Vorrichtung ist; die zweite elektronische Vorrichtung einen Speicher und einen Prozessor umfasst, und der Speicher mit dem Prozessor gekoppelt ist; der Speicher konfiguriert ist, um Computerprogrammcode zu speichern, und der Computerprogrammcode Computeranweisungen umfasst; und wenn die Computeranweisungen durch den Prozessor ausgeführt werden, die zweite elektronische Vorrichtung veranlasst wird, das vorrichtungsübergreifende Anwendungsaufrufverfahren nach einem der Ansprüche 8 bis 10 durchzuführen.

13. Computerlesbares Speicherungsmedium, umfassend Computeranweisungen, wobei, wenn die Computeranweisungen auf einer elektronischen Vorrichtung laufen gelassen werden, die elektronische Vorrichtung in die Lage versetzt wird, das Verfahren nach einem der Ansprüche 1 bis 10 durchzuführen.

14. Computerprogrammprodukt, wobei, wenn das Computerprogrammprodukt auf einem Computer laufen gelassen wird, der Computer aktiviert wird, um das Verfahren nach einem der Ansprüche 1 bis 10 durchzuführen.

## Revendications

1. Procédé d'invocation d'application inter-dispositifs, appliqué à un premier dispositif électronique, dans lequel le procédé comprend :
en réponse à une première opération effectuée par l'utilisateur sur les données cibles, l'envoi, par le premier dispositif électronique, d'informations d'indication d'un type de fichier des données cibles à un ou plusieurs dispositifs électroniques, dans lequel le premier dispositif électronique détermine le type de fichier des données cibles en fonction d'un nom d'extension de fichier des données cibles, dans lequel les un ou plusieurs dispositifs électroniques ne comprennent pas le premier dispositif électronique, et dans lequel les un ou plusieurs dispositifs électroniques comprennent un second dispositif électronique, et dans lequel une distance entre l'un ou plusieurs dispositifs électroniques et le premier dispositif électronique est inférieure à un seuil de distance prédéfini ;
la réception, par le premier dispositif électronique, d'icônes d'une pluralité d'applications provenant des un ou plusieurs dispositifs électroniques, dans lequel la pluralité d'applications sont des applications qui se trouvent dans les un ou plusieurs dispositifs électroniques en lien avec les données cibles dans les un ou plusieurs dispositifs électroniques, dans lequel la pluralité d'applications comprennent une première application qui n'est pas installée dans le premier dispositif électronique, dans lequel les icônes de la pluralité d'applications comprennent une icône de la première application envoyée par le second dispositif électronique, et dans lequel le second dispositif a déterminé, en fonction du type de fichier des données cibles, que la première application installée sur le second dispositif électronique est une application qui peut traiter les données cibles ;
l'affichage (S401), par le premier dispositif électronique, d'une première interface sur le premier dispositif électronique, la première interface comprenant les icônes de la pluralité d'applications ;
et
l'envoi (S402), par le premier dispositif électronique, d'un premier message au second dispositif électronique en réponse à une deuxième opération effectuée par l'utilisateur sur l'icône de la première application dans les icônes de la pluralité d'applications, dans lequel le premier message comprend les données cibles, et le premier message est utilisé pour indiquer au second dispositif électronique de traiter les données cibles à l'aide de la première application.

2. Procédé selon la revendication 1, dans lequel la première application est une application sociale ; et l'envoi, par le premier dispositif électronique, d'un premier message à un second dispositif électronique en réponse à une deuxième opération effectuée par l'utilisateur sur une icône d'une première application dans les icônes de la pluralité d'applications comprend :
l'affichage, par le premier dispositif électronique, d'une seconde interface en réponse à la deuxième opération effectuée par l'utilisateur sur l'icône de la première application, dans lequel la seconde interface comprend une pluralité d'options de contact de la première application, et chaque option de contact correspond à un contact dans la première application ; et
l'envoi, par le premier dispositif électronique, du premier message au second dispositif électronique en réponse à une troisième opération effectuée par l'utilisateur sur une première option de contact dans la seconde interface, dans lequel
le premier message comprend en outre un premier compte, le premier compte est un compte d'un contact correspondant à la première option de contact, et le premier message est utilisé pour indiquer au second dispositif électronique d'envoyer les données cibles au premier compte à l'aide de la première application.

3. Procédé selon la revendication 1 ou 2, dans lequel la première interface comprend en outre un identifiant d'un dispositif électronique correspondant à chaque application de la pluralité d'applications.

4. Procédé selon les revendications 1 à 3, dans lequel les un ou plusieurs dispositifs électroniques comprennent une pluralité de dispositifs électroniques ; et
après la réception, par le premier dispositif électronique, des icônes de la pluralité d'applications provenant des un ou plusieurs dispositifs électroniques, et avant l'affichage, par le premier dispositif électronique, de la première interface comprenant les icônes de la pluralité d'applications, le procédé comprend en outre :
l'affichage, par le premier dispositif électronique, des identifiants de la pluralité de dispositifs électroniques ; et
l'affichage, par le premier dispositif électronique, de la première interface en réponse à une opération de sélection effectuée par l'utilisateur sur un identifiant du second dispositif électronique dans les identifiants de la pluralité de dispositifs électroniques, dans lequel
les icônes de la pluralité d'applications comprises dans la première interface sont des icônes d'applications qui se trouvent dans le second dispositif électronique et en lien avec les données cibles.

5. Procédé selon l'une quelconque des revendications 1 à 4, dans lequel la pluralité d'applications comprennent des applications qui se trouvent dans un ou plusieurs dispositifs électroniques et en lien avec les données cibles :
la pluralité d'applications comprennent des applications qui se trouvent dans les un ou plusieurs dispositifs électroniques et qui sont en lien avec les données cibles et ne sont pas installées dans le premier dispositif électronique.

6. Procédé selon l'une quelconque des revendications 1 à 5, dans lequel les icônes de la pluralité d'applications comprennent en outre une icône d'une application qui se trouve dans le premier dispositif électronique et en lien avec les données cibles.

7. Procédé selon la revendication 5, dans lequel l'affichage, par le premier dispositif électronique, de la première interface en réponse à une opération de sélection effectuée par l'utilisateur sur un identifiant du second dispositif électronique dans les identifiants de la pluralité de dispositifs électroniques comprend :
en réponse à l'opération de sélection effectuée par l'utilisateur sur l'identifiant du second dispositif électronique dans les identifiants de la pluralité de dispositifs électroniques, la détermination par le premier dispositif électronique établissant si un compte ayant ouvert une session sur le second dispositif électronique et un compte ayant ouvert une session sur le dispositif électronique sont des comptes associés, et l'affichage, par le premier dispositif électronique, de la première interface si un compte ayant ouvert une session sur le second dispositif électronique et un compte ayant ouvert une session sur le premier dispositif électronique sont des comptes associés, dans lequel des comptes associés signifient que le compte ayant ouvert une session sur le second dispositif électronique et le compte ayant ouvert une session sur le premier dispositif électronique sont un même compte, ou dans lequel des comptes associés signifient que le compte ayant ouvert une session sur le second dispositif électronique est différent du compte ayant ouvert une session sur le premier dispositif électronique, mais qu'il existe une association entre le compte ayant ouvert une session sur le second dispositif électronique et le compte ayant ouvert une session sur le premier dispositif électronique, comprenant : le compte ayant ouvert une session sur le second dispositif électronique est un compte familial du compte ayant ouvert une session sur le premier dispositif électronique, ou le compte ayant ouvert une session sur le second dispositif électronique est un compte ami du compte ayant ouvert une session sur le premier dispositif électronique ; ou
si le compte ayant ouvert une session sur le second dispositif électronique et le compte ayant ouvert une session sur le premier dispositif électronique ne sont pas des comptes associés, la réalisation, par le premier dispositif électronique, d'une authentification d'identité de l'utilisateur du premier dispositif électronique ; et si l'authentification d'identité réussit, l'affichage, par le premier dispositif électronique, de la première interface, et dans lequel, si l'authentification d'identité réussit, cela indique qu'il existe une association entre l'utilisateur du premier dispositif électronique et le second dispositif électronique, et l'utilisateur du premier dispositif électronique est un utilisateur de confiance, et dans lequel, si l'authentification d'identité échoue, cela indique qu'il n'existe pas d'association entre l'utilisateur du premier dispositif électronique et le second dispositif électronique, et l'utilisateur du premier dispositif électronique n'est pas un utilisateur de confiance, et le premier dispositif électronique n'affiche pas la première interface.

8. Procédé d'invocation d'application inter-dispositifs, appliquée à un second dispositif électronique, dans lequel le procédé comprend :
la réception (S1201), par le second dispositif électronique, d'informations d'indication d'un type de fichier de données cibles provenant d'un premier dispositif électronique, dans lequel le type de fichier des données cibles a été déterminé par le premier dispositif électronique en fonction d'un nom d'extension de fichier des données cibles ;
la détermination, par le second dispositif, en fonction du type de fichier des données cibles, qu'une première application installée sur le second dispositif électronique est une application qui peut traiter les données cibles ;
l'envoi (S1202), par le second dispositif électronique, d'une icône de la première application au premier dispositif électronique, dans lequel la première application n'est pas installée dans le premier dispositif électronique, et une distance entre le second dispositif électronique et le premier dispositif électronique est inférieure à un seuil de distance prédéfini ; et
la réception (S402, S1203), par le second dispositif électronique, d'un premier message provenant du premier dispositif électronique, et le traitement des données cibles à l'aide de la première application, dans lequel le premier message comprend les données cibles, et le premier message est utilisé pour indiquer au second dispositif électronique de traiter les données cibles à l'aide de la première application.

9. Procédé selon la revendication 8, dans lequel la première application est une application sociale ; et avant la réception, par le second dispositif électronique, d'un premier message provenant du premier dispositif électronique, le procédé comprend en outre :
l'envoi, par le second dispositif électronique, d'informations concernant une pluralité de contacts dans la première application au premier dispositif électronique, dans lequel les informations concernant la pluralité de contacts sont utilisées pour afficher une pluralité d'options de contact de la première application, et chaque option de contact correspond à un contact dans la première application.

10. Procédé selon la revendication 8 ou 9, dans lequel le premier message comprend en outre un premier compte, et
la réception, par le second dispositif électronique, d'un premier message provenant du premier dispositif électronique, et le traitement des données cibles à l'aide d'une première application comprennent :
la réception, par le second dispositif électronique, du premier message provenant du premier dispositif électronique, et l'envoi des données cibles au premier compte à l'aide de la première application.

11. Dispositif électronique, dans lequel le dispositif électronique est un premier dispositif électronique ; le premier dispositif électronique comprend une mémoire et un processeur, et la mémoire est couplée au processeur ; la mémoire est configurée pour stocker un code de programme d'ordinateur, et le code de programme d'ordinateur comprend des instructions d'ordinateur ; et lorsque les instructions d'ordinateur sont exécutées par le processeur, elles amènent le premier dispositif électronique à effectuer le procédé d'invocation d'application inter-dispositifs selon l'une quelconque des revendications 1 à 7.

12. Dispositif électronique, dans lequel le dispositif électronique est un second dispositif électronique ; le second dispositif électronique comprend une mémoire et un processeur, et la mémoire est couplée au processeur ; la mémoire est configurée pour stocker un code de programme d'ordinateur, et le code de programme d'ordinateur comprend des instructions d'ordinateur ; et lorsque les instructions d'ordinateur sont exécutées par le processeur, elles amènent le second dispositif électronique à effectuer le procédé d'invocation d'application inter-dispositifs selon l'une quelconque des revendications 8 à 10.

13. Support de stockage d'ordinateur, comprenant des instructions d'ordinateur, dans lequel, lorsque les instructions d'ordinateur sont exécutées sur un dispositif électronique, le dispositif électronique est habilité à effectuer le procédé selon l'une quelconque des revendications 1 à 10.

14. Produit programme d'ordinateur, dans lequel lorsque le produit programme d'ordinateur est exécuté sur un ordinateur, l'ordinateur est habilité à effectuer le procédé selon l'une quelconque des revendications 1 à 10.
